# EUROPEAN PATENT APPLICATION

(11) **EP 4 555 854 A1**
(43) Date of publication of application: **21.05.2025**
(21) Application number: 24213624.0
(22) Date of filing: 18.11.2024
(51) Int. Cl.: A01G 23/083

(54) **ARRANGEMENT FOR HARVESTING ENERGY WOOD AND METHOD FOR PROVIDING POSITIONING PROPERTIES FOR WORKING WITH AN ENERGY WOOD GRAPPLE**

(30) Priority: 17.11.2023 FI 20236283; 29.12.2023 FI 20236451; 28.08.2024 FI 20246064
(71) Applicant: TMK Machinery OY, 41520 Hankasalmi (FI)
(72) Inventor: KOPONEN, Tenho, 41560 SÄKINMÄKI (FI); KOPONEN, Mika, 05720 HYVINKÄÄ (FI)
(74) Representative: Kespat Oy

(57) **Abstract**

The invention relates to an arrangement (10') for harvesting energy wood, wherein the arrangement includes an energy-wood grapple (200) equipped with a cutting device (203). The arrangement further includes an extension 30 which includes two parts (30.1, 30.2). The energy-wood grapple is arranged on the first part of the extension. The second part of the extension includes a connection point (12') for arranging the extension on a fastening interface (109, 45) of an end (102) of a boom (101, 71). The arrangement further includes at least one first pivot mechanism (29) arranged on the first part of the extension for arranging the energy-wood grapple in the arrangement in a vertically (V) pivotable manner. The arrangement further includes a second pivot mechanism (60) arranged between the first part and the second part of the extension for arranging the energy-wood grapple in the arrangement in a horizontally (H) pivotable manner. The invention further relates to a method for providing positioning properties for working with an energy-wood grapple and to an apparatus for harvesting energy wood.

## Description

The invention relates to an arrangement for harvesting an energy wood. The invention further relates a method for providing positioning properties for working with an energy-wood grapple and to apparatus for harvesting energy wood.

For example, a hydraulic extension beam, which can also be called only an extension, is known for increasing the efficiency of work performed with an energy-wood grapple. The extension beam can be attached as an extension to an end of a boom assembly of an excavator acting as a work machine. The energy-wood grapple is thus arranged on the end of the extension beam instead of on the end of the boom assembly. The extension beam improves, for example, the working reach of the energy-wood grapple. The extension beam makes it easy to move the energy-wood grapple over, for example, ditches or other objects that restrict the movement of the excavator without it being necessary to manoeuvre the excavator into awkward places. For example, it is possible to harvest trees, quite far too, growing on an embankment on the other side of a ditch or even behind of that from the edge of a flat field area or road. The extension beam also acts as an extension of the boom assembly in other situations, so that the excavator does not need to be moved as often.

By means of the extension beam, the distance between the energy-wood grapple and the end of the boom assembly can be changed. In its extended position, the extension beam creates - even more so when an energy-wood grapple is arranged at the end of the same - considerable torsion on the bucket-pivoting arm assembly and the fastening interface located at the end of the boom assembly. The torsion is even greater when the energy-wood grapple has a long tree that it has harvested in its grip.

Furthermore, changing the position of the extension beam with the bucket-pivoting arm assembly wears the actuator that operates the arm assembly and consumes energy. As a result, it has been customary to lock the bucket-pivoting arm assembly in such a manner that it is not operable in particular in extended positions of the extension beam. As a consequence, the position of the energy-wood grapple cannot be changed by the bucket-pivoting arm assembly in extended positions of the extension beam, but rather a special pivot mechanism is provided for the energy-wood grapple at the end of the extension beam, i.e. a pivot joint with actuators for providing a vertical rotational movement of the energy-wood grapple. By means of the pivot mechanism, the position of the energy-wood grapple can be levelled, i.e. the energy-wood grapple is arranged in a horizontal position, at any length of the extension beam. In addition, the pivot mechanism also enables an accompanying felling of a tree that remains in the grip of the energy-wood grapple during felling. It follows from the implementation of these two properties that the magnitude of the rotational movement produced by the pivot mechanism must be considerable, even over 160 degrees.

It is occasionally necessary to use the energy-wood grapple to fell larger trees and, in addition to that, to carry out a delimbing of larger trees while they are still upright, for example, in order to optimize a drying of the same. In addition, it can also be necessary to fell trees from behind retention trees. This often requires moving the work machine to a new position in order to be able to operate behind a retention tree or to fell a tree in a desired direction. In this case, it is not possible to achieve an optimal working efficiency with a rotation device or a combination of a rotation device and a tilting device arranged on the end of the boom assembly of an excavator working, for example, with an auxiliary beam of a fixed length, let alone an extension beam in connection with which the aforementioned equipment is typically not even provided on the end of the boom assembly.

It is an object of the invention to provide an arrangement and an apparatus for harvesting energy wood that makes working with the energy-wood grapple more efficient as well as more versatile with different kind of extensions. The characteristic features of an arrangement according to the invention are set out in the attached patent Claim 1. The characteristic features of an apparatus according to the invention are set out in the attached patent Claim 15. Furthermore, an object of the invention is to provide a method for providing positioning properties for working with an energy-wood grapple which makes possible new properties for working with the energy-wood grapple. The characteristic features of a method according to the invention are set out in the attached patent Claim 14.

An arrangement according to the invention includes a pivot mechanism for arranging the energy-wood grapple in the arrangement in a horizontally pivotable manner. This makes it easier to orient the energy-wood grapple arranged on the end of the extension for the cutting and felling of a tree compared to, for example, a situation in which these occur using equipment, which does not even always provide for this option, arranged on the end of the boom assembly.

Furthermore, in addition to the horizontal rotational functionality, the arrangement also includes a rotational functionality of an energy-wood grapple in a vertical direction, of which also name of a felling link can be used. For this purpose the arrangement includes corresponding own pivot mechanism. By using that a tree can be felled solely with the energy-wood grapple when a tree is accompanying felled, i.e. when it is brought from a vertical position to a felled position. In other words, the tree thus can herein be remained in the grip of the energy-wood grapple throughout felling.

According to one embodiment, when it is implemented, for example, in connection with a hydraulic extension beam, i.e. with an extension that is variable in length, or alternatively with a telescopic boom of a work machine, the arrangement according to the invention even provides the same with an entirely new additional property, i.e. a horizontal rotation of the energy-wood grapple. This adds to the operational possibilities, such as, for example, the possibility of felling trees from behind retention trees. This expedites operation and also eliminates the need to move the work machine to a position with better access a location behind a retention tree. Furthermore, the property of a horizontal rotation now becomes possible for work machines which are not provided or which cannot be provided - for example, due to the extension used - with rotator or tiltrotator equipment at the end of the boom assembly.

According to one embodiment, an energy-wood harvesting to be performed with a work machine, more specifically with an excavator, is enhanced and rendered more efficient by an arrangement and a method according to the invention also in cases in which the excavator does not have a rotator or tiltrotator arranged at the end of the boom assembly or in which it is not possible to use the same, for example due to a long length of the extension, despite their being arranged as equipment at the end of the boom assembly. The same advantage can, of course, equally be achieved, for example, for forestry machines and forestry loaders, which can also be understood as work machines. By implementing a horizontal rotation as part of the arrangement, in connection with an extension, the same functionality is achieved that is achieved with a rotator and tiltrotator arranged on the end of the boom assembly. In addition, a horizontal rotation as part of the arrangement is a much lighter design than, for example, a tiltrotator, so that it also subjects the equipment belonging to the end of the boom assembly, in particular the articulations, to less stress.

According to one embodiment, in particular in the case of an extension beam that is variable in length or a telescopic extension that belongs to the boom assembly of the work machine, a large vertical rotation angle of the energy-wood grapple is achieved by implementing this functionality on both sides of the horizontal rotation, i.e. partly on the side of the energy-wood grapple and partly on the side of the end of the extension beam. There is thus respectively a rotational functionality implemented on the side of the energy-wood grapple for a felling rotation and a rotational functionality implemented on the side of the end of the boom assembly for a levelling rotation, i.e. for controlling the position of the energy-wood grapple. By this means, the energy-wood grapple can be placed in its horizontal working position at any length of the extension beam.

According to one embodiment of the arrangement according to the invention, the first pivot mechanism includes an actuator that has two parts. The actuator is attached in an articulated manner by one part to an implement frame belonging to the energy-wood grapple. The actuator is attached by the second part in an articulated manner to a first part of the extension.

According to one embodiment of the arrangement according to the invention, the first pivot mechanism includes an articulated connection arranged between the energy-wood grapple and the first part of the extension. The articulated connection is arranged on the energy-wood grapple in such a manner that, when the arrangement is arranged on the end of the boom assembly of a work machine, the articulated connection is on the side of the face of the extension that lies opposite its face on the side of the end of the boom assembly.

According to one embodiment of the arrangement according to the invention, the extension belonging to the arrangement is arranged so as to extend to the opposite side of the end of the boom assembly with respect to the carriage part of the work machine.

According to one embodiment of the arrangement according to the invention, the first pivot mechanism, i.e. the rotation of the energy-wood grapple that occurs in a vertical direction, includes an articulated connection arranged between the energy-wood grapple and the first part of the extension. According to one embodiment, the articulated connection is arranged on the energy-wood grapple in such a manner that at least part of the implement frame belonging to the energy-wood grapple is underneath the first part belonging to the extension.

According to one embodiment of the arrangement according to the invention, the energy-wood grapple includes a fastening interface for arranging the energy-wood grapple on the end of the boom assembly of an excavator without rotational movements being provided in connection with an extension. In this case, the fastening interface is arranged on a surface of the implement frame belonging to the energy-wood grapple. Moreover, the fastening interface is provided in this case for a connector of an excavator acting as the work machine or for a quick coupling arranged on the end of the boom assembly of the excavator.

According to one embodiment of the arrangement according to the invention, the first part of the extension belonging to the arrangement is arranged so as to be rigidly connected to a second pivot mechanism. As a result, the first part of the extension and the energy-wood grapple arranged on the first part necessarily pivot in unison with a movement of the second pivot mechanism. In other words, they thus follow the horizontal rotational movement produced by the second pivot mechanism.

According to one embodiment of the arrangement according to the invention, the energy-wood grapple includes an implement frame on which a cutting device is arranged. The energy-wood grapple is arranged by its implement frame, by means of an articulated connection arranged thereon, on the extension in such a manner that an open space is provided in the energy-wood grapple above the cutting device, for example for equipment provided in addition to the cutting device. This space or, for example, the equipment arranged there is arranged so as to be located at least partially in front of the extension.

According to one embodiment of the method according to the invention, the felling rotation of the energy-wood grapple can be provided in connection with the first part of the extension. In this case, the levelling rotation of the energy-wood grapple is provided in connection with the second part of the extension.

According to one embodiment of the method according to the invention, a substitution of the properties of a rotator or tiltrotator of the end of the boom assembly of a work machine, more specifically of an excavator, can be implemented by means of a second pivot mechanism, i.e. by a horizontal rotation.

With respect to the rotational movements provided with the arrangement for an energy-wood grapple, the arrangement, the method and the apparatus according to the invention achieve at least the following specific advantages:
- felling trees is fast (significantly faster than, for example, when carried out with a bucket-pivoting motion alone),
- the mass to be moved during the felling of a tree is much less compared to a situation in which felling is carried out with an all-in-one apparatus typically including a bucket rotator and tilter (i.e. a tiltrotator) as well as an extension beam,

- a space required for felling, i.e. a rotation radius, is much smaller (owing to the solution according to the invention, the operator of the work machine does not have to make adjustments for the required space by moving the entire boom assembly up/down),
- trees can be felled freely in different directions, even when located behind trees that are to remain standing,
- there is significantly more reach for cutting on the ground,
- a tree can be delimbed higher up when the pivot mechanism is utilized to set an appropriate delimbing position.

Further additional advantages that can be achieved with the invention are set out in the description while features are set out in the attached patent Claims.

The invention, which is not limited to the embodiments described in the following, is explained in more detail with reference to the attached figures, wherein
- Figures 1 - 4: show oblique views of the extension of a first embodiment of the arrangement from different directions,
- Figures 5 and 6: show oblique views of the extension of a second embodiment of the arrangement from different directions,
- Figures 7 and 8: show oblique views of the extension of a third embodiment of the arrangement from different directions,
- Figures 9 and 10: show oblique views of the embodiment shown in Figures 7 and 8 from different directions and with the levelling rotation of the energy-wood grapple in different positions,
- Figure 11: shows another embodiment for providing a horizontal rotational movement of an energy-wood grapple,
- Figures 12 and 13: show the boom assembly of a work machine in its end positions in the case of a variable-length extension beam,
- Figure 14: shows another embodiment of a work machine in which the arrangement according to the invention can be utilized,
- Figure 15: shows an example of a range of movement of an energy-wood grapple produced by an arrangement according to the invention in the case of a vertical rotational movement,
- Figures 16 - 18: show an example of an operation rendered possible by an arrangement according to the invention when felling a tree,
- Figure 19: shows a variant of the second embodiment for providing a horizontal rotational movement of an energy-wood grapple,
- Figure 20: shows the variant of the second embodiment shown in Figure 19 with the energy-wood grapple in a felling position,
- Figure 21: shows the variant of the second embodiment shown in Figures 19 and 20 in more detail,
- Figure 22: shows one way of arranging the arrangement on the end of a boom by the part of a levelling-rotation pivot actuator,
- Figures 23 and 24: show some other embodiments of extensions in the case of the pivot mechanisms shown in Figures 19 - 21.

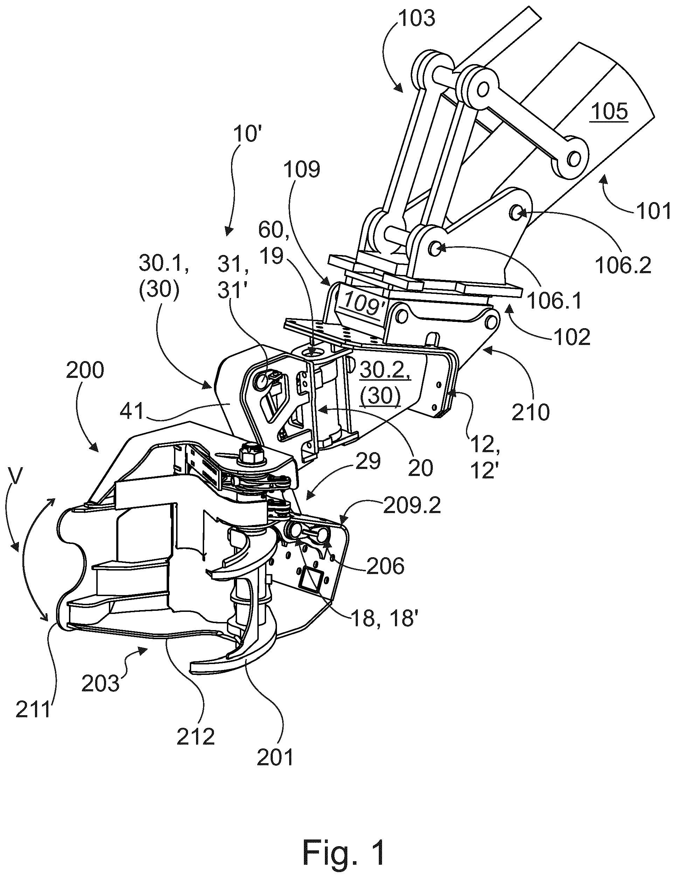

Figures 1 - 4 show views of a first example of an arrangement 10' according to the invention for arranging an energy-wood grapple 200 on an extension 30 from different directions.

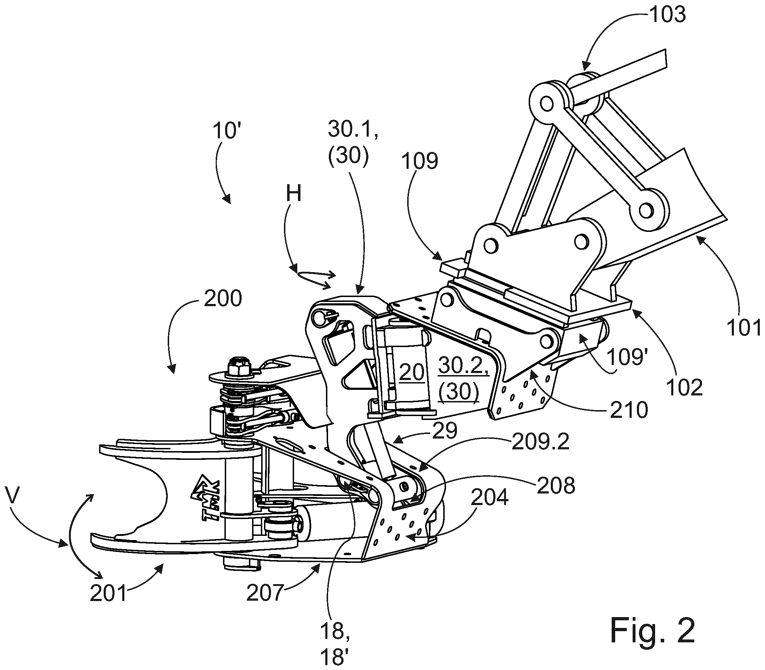

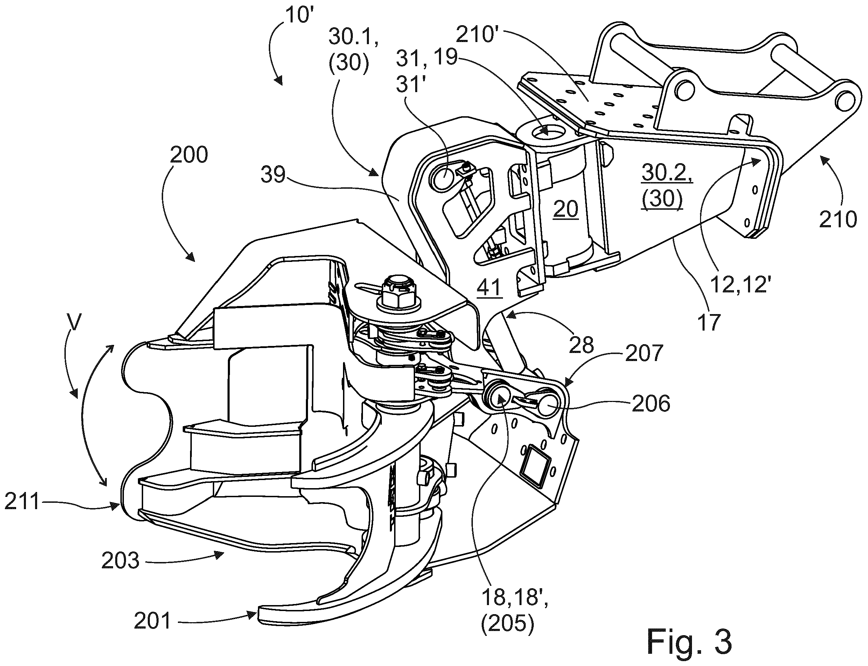

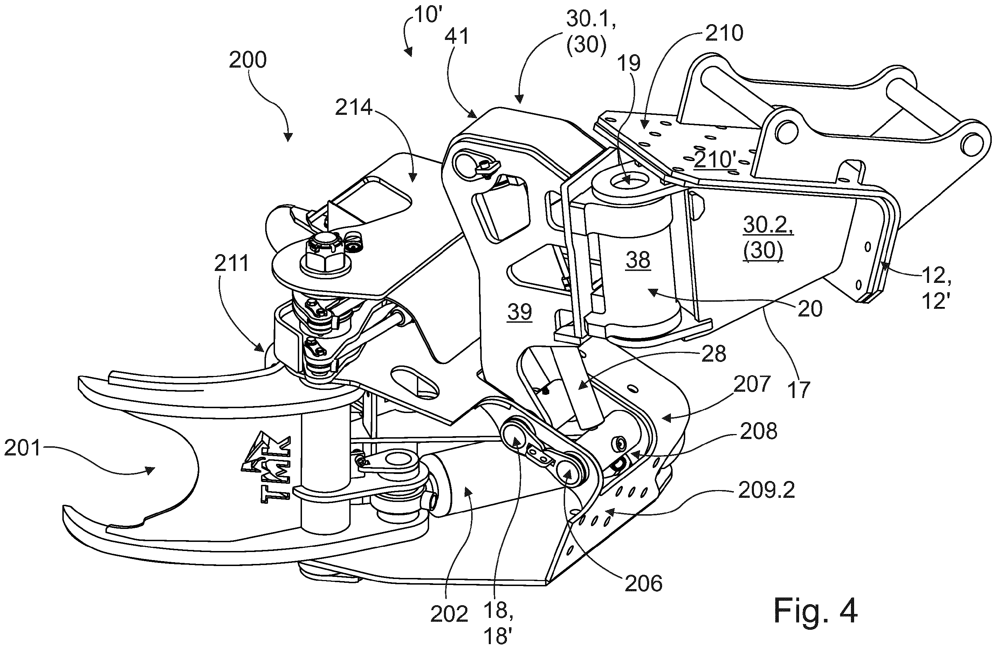

Figures 1 and 2 show views of the arrangement 10' arranged on the end 102 of a boom assembly 101 from two different directions. Figures 3 and 4 in turn show views of just the arrangement 10', without the end 102 of the boom assembly 101, from different directions. Moreover, the energy-wood grapple 200 in Figures 3 and 4 is also partially sectioned at its implement frame 207 in order to better illustrate one of its fastening interface 209.1. The basic parts of the arrangement 10' include an energy-wood grapple 200, an extension 30, at least one first pivot mechanism 29 for pivoting the energy-wood grapple 200 vertically V and a second pivot mechanism 60 for pivoting the energy-wood grapple 200 horizontally H. Pivoting here means a rotational movement that occurs via a given articulation point. Furthermore, a pivoting is also characterized in that one part moves, i.e. rotates, in relation to another part. The other part thus remains stationary during pivoting.

The energy-wood grapple 200 is intended in a manner known *per* se for harvesting wood for energy use. The energy-wood grapple 200 includes a cutting device 203. This can be implemented, for example, by means of a guillotine principle or a blade saw. In a guillotine cutting, there can be either a movable blade or a stationary blade 212 (Figure 1). With a stationary blade 212, the tree to be cut is squeezed by the cutting device 203, more specifically pressed against the blade 212 by its grippers 201. A guillotine principle is thus used to cut through the tree. The grippers 201 are operated in this case with a hydraulic actuator 202 (Figure 4). Similarly, it would also be possible for the blade to be in the grippers.

Energy wood refers here to trees 10 - 30 cm in diameter or even 10 - 50 cm in diameter that can be harvested with an energy-wood grapple 200. The nominal diameter of a tree to be harvested depends on the characteristics of the energy-wood grapple 200. Typically, a tree to be harvested by the energy-wood grapple 200 is intended for combustion in order to produce energy. If necessary, it is even possible to delimb, for example, the thickest trees with the energy-wood grapple 200 in order to optimize their drying. Typically, however, energy wood is wood that has not been delimbed, so that it can also be referred to as the whole tree.

The energy-wood grapple 200 can be equipped with a batch-handling feature (reference number 214 in the figures) or can be without such a feature. The batch-handling feature allows multiple trees to be handled in a known manner at a time. It thus makes it possible to perform a plurality of cuts at different times while a plurality of trees are simultaneously gathered together in the grip of the grapple. In other words, operations are thus carried out without a release of the trees already cut and harvested by the energy-wood grapple 200 between operations. For example, the energy-wood grapple 200 can have gathering members for batch handling. Trees that have already been cut and picked up by the energy-wood grapple 200 are held in the grip of the energy-wood grapple 200 during the next one or more cuts. The batch-handling feature makes it possible to form small grapple bundles from the cut and gathered-up trees, wherein the bundles are defined by the harvesting capacity, i.e. dimensions, of the energy-wood grapple 200.

An energy-wood grapple 200 implemented without the batch-handling feature releases cut wood material, for example, after each cutting operation. The wood material in this case can include at least one trunk, log, branch or crown. However, especially when operating in densely wooded areas, there can be several of these in the energy-wood grapple 200 at any one time, even when it is not equipped with the batch-handling feature.

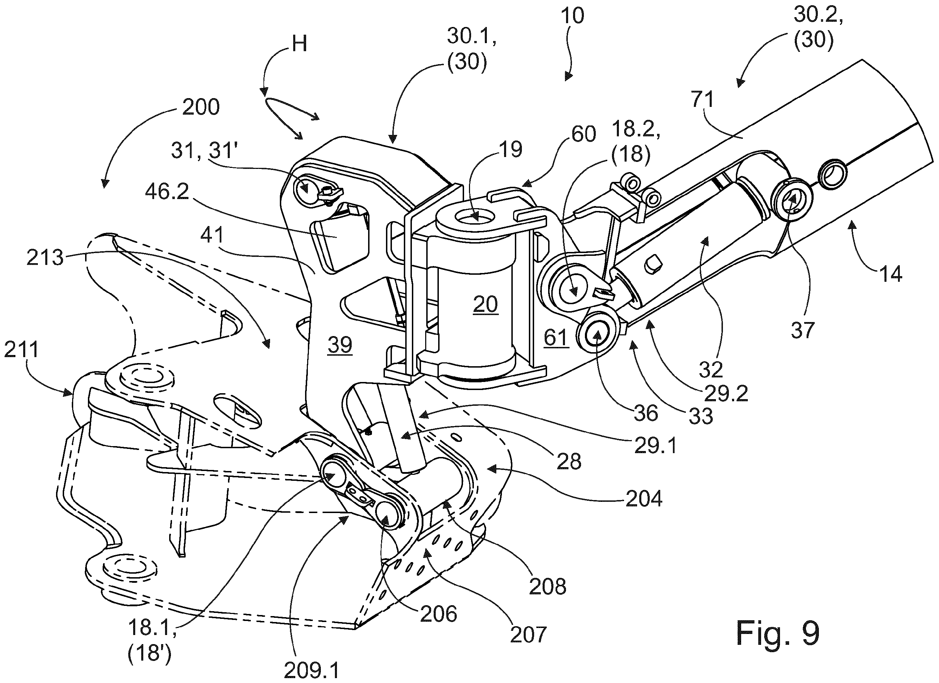

In addition to the energy-wood grapple 200, the arrangement 10' also includes an extension 30. The extension 30 is intended to optimize work with the energy-wood grapple 200, which in practice takes the form of an improved working reach. The energy-wood grapple 200 can be arranged by its fastening interface 209.1 (Figure 9) on the extension 30. Via the extension 30, the energy-wood grapple 200 can be arranged on equipment, such as, for example, a bucket rotator, arranged on the end 102 of the boom assembly 101 of a work machine 100, which is an excavator 100' here by way of example. To this end, the extension 30 is equipped with a fastening interface 12 at the end opposite the energy-wood grapple 200 for arranging the extension 30 on the end 102 of a boom assembly 101 of a work machine 100, such as, for example, an excavator 100'. One example of this fastening interface 12 can be, for instance, an arrangement of openings. A suitable connector 210 for the equipment arranged on the end 102 of the boom assembly 101 can be fastened to the arrangement of openings. When it creates a working reach, the extension 30 can also be said to be arranged so as extend, when it is oriented so as to face forward, parallel to the plane defined by the direction of movement of the booms 104, 105 belonging to the boom assembly 101 of the work machine 100. The extension 30, when oriented so as to face forward, i.e., away from the carriage part 107 of the work machine 100, is thus arranged so as to be oriented to the opposite side of the end 102 of the boom assembly 101 of the work machine 100 with respect to the carriage part 107 of the work machine 100.

The end 102 of the boom assembly 101 of the excavator 100' disclosed now as a work machine 100 can be equipped in a manner known *per se* with a movable bucket-pivoting arm assembly 103. The position of an object joined to the end of the boom assembly 101, such as, for example, an extension 30, is changed in the vertical plane V by means of the bucket-pivoting arm assembly 103. The vertical plane V can be defined here by, for example, the direction of movement of the booms 104, 105 belonging to the boom assembly 101, which are attached to each other in an articulated manner. When they are at an angle relative to each other, the booms 104, 105 define the plane. In addition, the end 102 of the boom assembly 101 of the excavator 100' can be equipped in a manner known *per se* with equipment that includes a fastening interface 109 for a work device. The work device can be, for example, a bucket or here the extension 30 or a part 30.2 of the extension belonging to the arrangement 10'.

As is known, a boom assembly 101 of an excavator 100, that is disclosed as one application example of the work machine 100, includes a main boom 104, which is attached in an articulated manner to the excavator 100', and an arm, which is attached in an articulated manner to the end of the main boom 104. This arm is frequently also called the excavation arm 105. The main boom 104 and the excavation arm 105, more generally the boom assembly 101, are at an angle with respect to each other. Together they thus define a plane. A vertical movement of the parts of the boom assembly 101 also occurs here in the same plane. The end of the excavation arm 105 has a fastening interface 109 for an implement or at least part of the same. The end 102 of the boom assembly 101 can include - either directly or, according to the shown embodiment, indirectly - a selected quick coupling 109'. The implement, such as, for example, a bucket or here, in the case of the invention, the extension 30 belonging to the arrangement 10' - can be quickly connected to this quick coupling 109' in a releasable manner. This occurs by means of a selected compatible counterpart element 210' (Figures 3 and 4). This counterpart element 210' is frequently also called a connector 210. When it is attached to the fastening interface 12 of the extension 30, the connector 210 can also be understood as part of the same. A "quick coupling" here denotes an attachment of an object, for example, without the use of tools and without the operator leaving the cab of the work machine 100. An extension 30 can be arranged via its fastening interface 12 in several different connector models. There are numerous different types of connector models available for excavators 100'. Alternatively, the extension 30 can also be arranged directly on a rotator provided, for example, with a possible inclination (or vice versa).

The quick coupling 109' which acts as the fastening interface 109 of the excavator 100' can be provided directly on the end 102 of the boom assembly 101 at the bucket-pivot articulation points 106.1, 106.2. It is also possible, however, for the fastening interface 109 or quick coupling 109' to be formed of, for example, by a rotator or by a combined bucket rotator and tilter, i.e. by a tiltrotator, as an integral part (not shown). According to a still further option, the fastening interface 109 can of course also be belonging to the rotator, i.e. without any special adapters. Like other work devices that can be attached, for example, by a quick coupling 109' to the end 102 of the boom assembly 101 of an excavator 100', the extension 30 with all its configured features can be provided just on the fastening interface 109 belonging to the end 102 of the boom assembly 101. In other words, it is thus possible to arrange it without any other mechanical attachment to the boom assembly 101 of the excavator 100'. This makes it extremely quick to connect as well as to disconnect.

To define this point more generally, the connection of the energy-wood grapple 200 via the extension 30 to the end 102 of the boom assembly 101 occurs in such a manner that the second part 30.2 of the extension 30 that is arranged closer to the work machine 100 and thus closer to the end 102 of the boom assembly 101 of the work machine 100 includes a connection point 12' for arranging the extension 30, and thus also the energy-wood grapple 200 via the extension 30, on the fastening interface 109 of the end 102 of the boom assembly 101 of the work machine 100. According to one embodiment, the extension 30 arranged on the fastening interface 109 can be moved by means of the bucket-pivoting arm assembly 103. The fastening interface 109 belonging to the end 102 of the boom assembly 101 here can equally be understood as equipment arranged on the end 102 of the boom assembly 101 of the work machine 100 instead of as just the articulation points 106.1, 106.2 at the end 102 of the boom assembly 101. In the case of equipment on the end 102 of the boom assembly, this can be moved by means of the bucket-pivoting arm assembly 103. Similarly, the connection point 12' can be understood as the fastening interface 12 configured in the second part 30.2 of the extension 30 that is arranged for the purposes of connection as well as a point provided solely for such a purpose. The fastening interface 12 in question can be provided, for example, retrofitted, at this point. The energy-wood grapple 200, in turn, is now arranged on the first part 30.1 of the extension 30 that is arranged further outwards with respect to the work machine 100 as well as, accordingly, with respect to the end 102 of the boom assembly 101 of the work machine 100.

The extension 30 belonging to the arrangement 10' can be said in this case to be of a fixed length. In other words, the length of the extension 30 is constant herein. It is thus not possible to change its length during operation.

Furthermore, at least one first pivot mechanism 29 belonging to the arrangement 10' is arranged in the extension 30, in the first part 30.1 (Figure 4) of the extension 30 that is arranged further outwards, opposite the attachment of the extension 30 to the boom assembly 101 of the excavator 100'. The first pivot mechanism 29 is arranged in the extension 30 so as to arrange the energy-wood grapple 200 pivotable in a vertical direction V in the arrangement 10' and thus also in the extension 30 and, more specifically, in the first part 30.1 of the extension 30.1. The pivot mechanism 29 can consequently also be said to be configured as part of the arrangement 10'. The first pivot mechanism 29 is arranged between the extension 30 and the energy-wood grapple 200. The direction of rotation of the energy-wood grapple 200 in terms of its vertical directionality V can be defined, for example, so as to occur in the plane defined by the direction of movement of the booms 104, 105 of the boom assembly 101 of the work machine 100 when the extension 30 is oriented in the longitudinal direction L2 of the boom assembly 101.

In addition to at least one first articulated connection 18', such as, for example, at least one first pivot joint 18, the first pivot mechanism 29 belonging to the arrangement 10' includes now an actuator 28. Together, these form the first pivot mechanism 29 for arranging the energy-wood grapple 200 pivotable in a vertical direction V in the extension 30 and thus also in the arrangement 10'. The energy-wood grapple 200 can consequently be said to be arranged by the articulated connection 18' on the first part 30.1 of the extension 30 that is arranged further outwards. The first pivot joint 18 with its actuators 28, or more generally the pivot mechanism 29, can be said to form part of the fastening interface 209.1 of the energy-wood grapple 200, the energy-wood grapple 200 having at least one such fastening interface 209.1 here for connecting to the extension 30. The rotational movement that occurs in relation to the pivot joint 18 thus only affects the energy-wood grapple 200, while the other parts belonging to the arrangement 10', such as, for example, the extension 30 to which the energy-wood grapple 200 is connected, remain stationary.

When the cutting device 203 of the energy-wood grapple 200 is oriented so as to face forward, i.e. away from the end 102 of the boom assembly 101 and from the carriage part 107, the pivot joint 18 that renders possible a vertical V rotational movement of the energy-wood grapple 200 is arranged so as to be perpendicular to the plane defined by the direction of movement of the booms 104, 105 of the boom assembly 101.

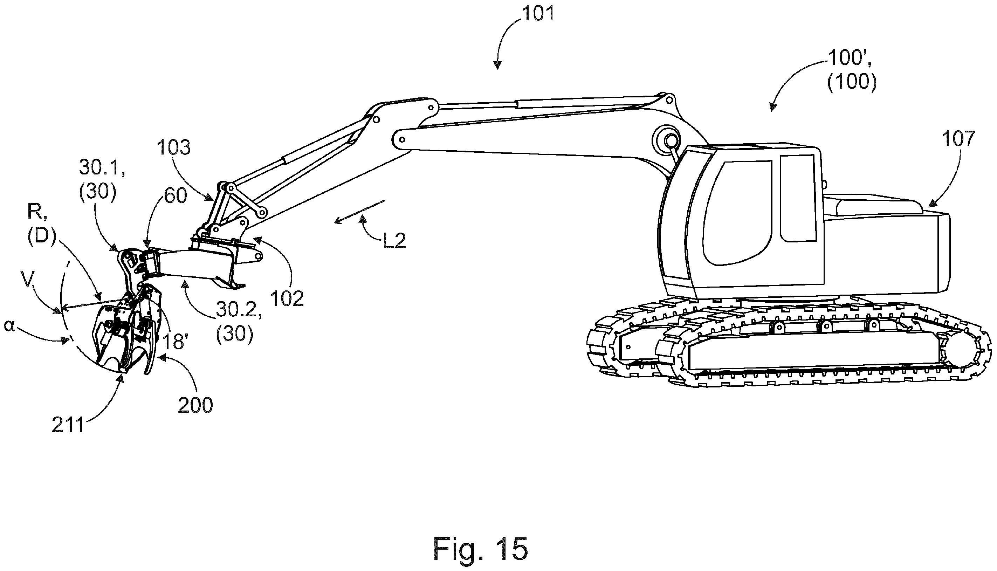

According to one embodiment, it is even possible to define the position of the pivot joint 18 in the arrangement 10' in a number of different ways. The pivot joint 18 is arranged in the energy-wood grapple 200 so as to minimize the rotation radius R of the energy-wood grapple 200. This is achieved by means of the design of the structure of the energy-wood grapple 200, in particular with respect to the pivot joint 18 arranged therein, not only of the connection of the pivot joint 18 to the extension 30 but also of the extension 30 itself in relation to an implement frame 207 of the energy-wood grapple 200, so as to minimize the distance D between the pivot joint 18 and the cutting device 203 of the energy-wood grapple 200, such as, for example, between the pivot joint 18 and an extreme point, i.e., outermost part 211 of the grapple (Figure 15). There can be several different ways and definitions to realize this in detail. According to one embodiment, the first pivot mechanism 29 includes an articulated connection 18' arranged between the energy-wood grapple 200 and the extension 30, which articulated connection 18' is implemented by means of the pivot joint 18 and is provided in the arrangement 10', more specifically in the energy-wood grapple 200, so that the rotation radius R (Figure 15) of the energy-wood grapple 200 with respect to the articulated connection 18' is less than 3.5 times the nominal diameter of the tree 300 to be manipulated by the energy-wood grapple 200.

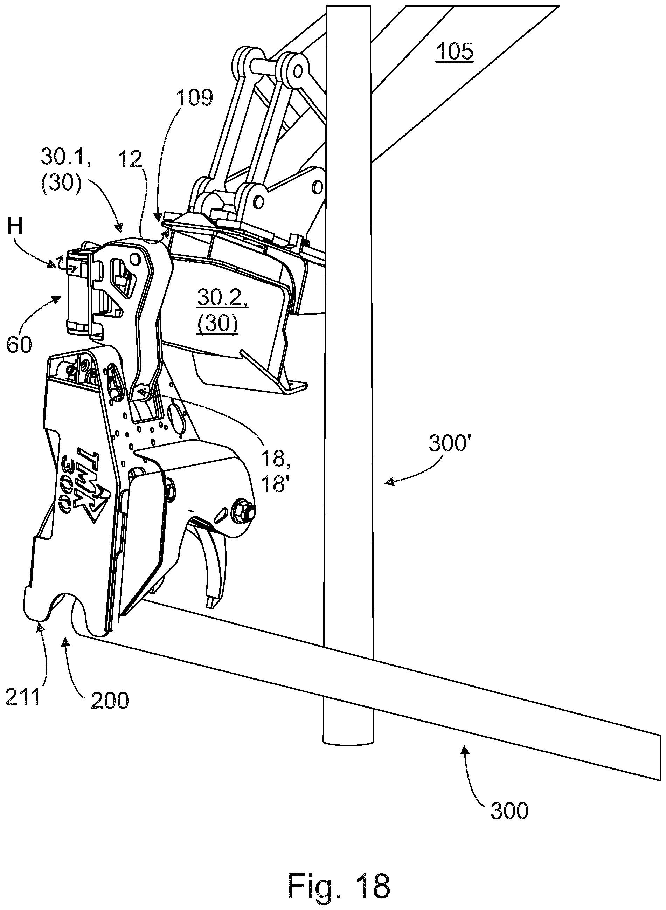

The rotation radius R of the energy-wood grapple 200 here denotes, for example, as shown in Figure 15, the distance D between the first pivot joint 18 and a part (typically a part provided, for example, in a fixed manner) of the grappler part of the cutting device 203 that is furthest away from the pivot joint 18, i.e. an outermost part 211. The rotation radius R is thus the maximum distance D between the pivot joint 18 and a part, for example, a grappler part, belonging to the cutting device 203. In the energy-wood grapple 200 shown here, this is the tip 211 of the fixed jaw of the grapple. However, the person skilled in the art will understand that, for example, in energy-wood grapples of another model, this can equally be some other point on the grapple, depending, for example, on the design of the cutting device 203 and the grapple belonging to it. Also in this case, however, the distance D between the pivot joint 18 and the outermost part 211 of the energy-wood grapple 200 is the grapple characteristic that limits work to be performed with the energy-wood grapple 200, for example, when felling a tree. This is because this outermost part 211 limits the felling rotation to be performed by the energy-wood grapple 200 when felling a tree. This part 211 is the part that protrudes the most from the energy-wood grapple 200 in every position and is thus the first to come into contact with the ground (Figure 18). This is one possible way of defining the minimum rotation radius R. To express the point of this definition in more general terms, the rotation radius R of the energy-wood grapple 200 is configured to be defined by the distance D between the articulated connection 18' and the outermost part 211 of the cutting device 203 in a felling situation. The outermost part 211 of the cutting device 203, and thus also of the energy-wood grapple 200, is consequently determined based on the point on the energy-wood grapple 200 from which the distance D to the articulated connection 18' is greatest.

Some random examples of a rotation radius R are, for instance, R < 1050 mm for an energy-wood grapple with a nominal diameter of 300 mm, R < 1220 mm for an energy-wood grapple with a nominal diameter of 350 mm, and R < 1400 mm for an energy-wood grapple with a nominal diameter of 400 mm.

According to an example embodiment of a definition, the nominal diameter of a tree 300 to be manipulated with the energy-wood grapple 200 can be configured to be determined, for example, by the cutting capacity of the cutting device 203. One technical feature that defines this capacity in this case can be, for example, the cutting capacity of the blade 212. In other words, this is the maximum diameter of a tree 300 that the energy-wood grapple 200 can cut through in a single squeezing movement performed with its grippers 201. With respect to the size of the seat of the cutting device 203, according to another embodiment, the position of the pivot joint 18 can also be defined so as to be at a distance of less than 600 mm as measured from the stem of a tree cut by the energy-wood grapple 200 and squeezed into the seat of the cutting device 203. The measurement is performed here from the point on the stem of a tree in the seat that is closest to the pivot joint 18.

In addition to the cutting capacity of the blade 212, the maximum capacity of the energy-wood grapples 200 is also determined by the size of the seat of the grapple of the cutting device 201. A tree exceeding this capacity cannot be cut and/or does not fit into the seat so as to remain there safely when the tree is moved.

According to one embodiment, the first pivot mechanism 29 includes, in addition to an articulated connection 18' between the energy-wood grapple 200 and the first part 30.1 of the extension 30, an actuator 28, which are arranged in the arrangement 10', more specifically in the energy-wood grapple 200, so that the rotation angle α of the energy-wood grapple 200 with respect to the articulated connection 18' is 90 - 110 degrees (Figure 15). More commonly, the rotation angle α of the energy-wood grapple 200 with respect to the articulated connection 18' can be, for example, 80 - 110 degrees. The first pivot joint 18 thus allows a rotation angle which is safe for the energy-wood grapple 200 in all working situations and which is also not damaging to any devices.

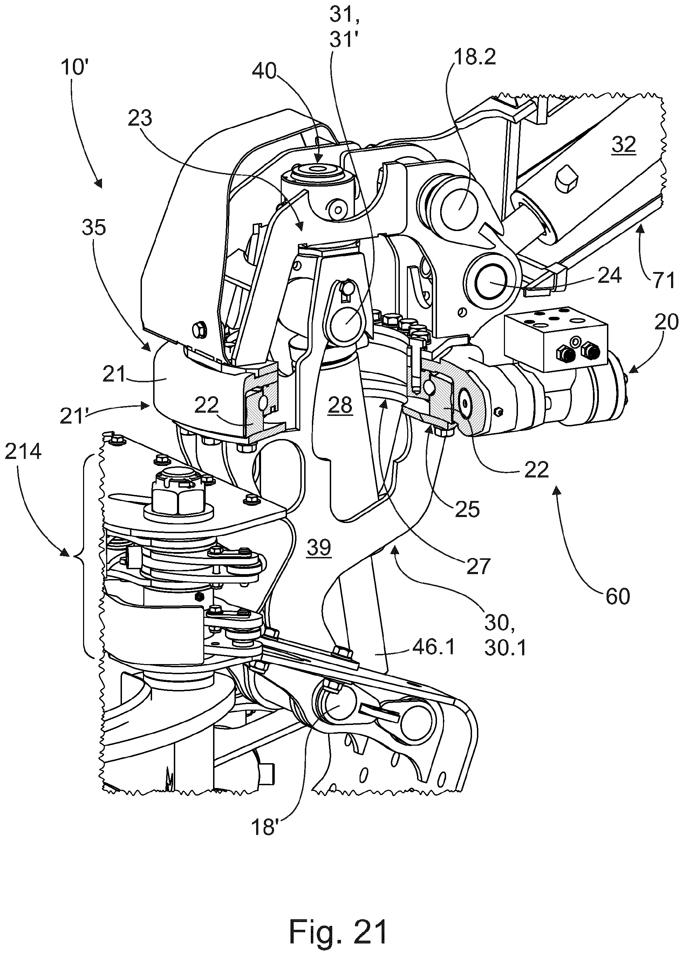

According to one embodiment, the actuator 28 of the first pivot mechanism 29 is attached by one of its parts 46.1 (Figure 21), here the end of its piston rod, in an articulated manner to the implement frame 207 of the energy-wood grapple 200. By its second part 46.2 (Figure 9), here the end of its cylinder part, the actuator 28 of the first pivot mechanism 29 is connected in an articulated manner at its articulation point 31 rigidly to the first part 30.1 of the extension 30. The actuator 28 thus only pivots with respect to this articulation point 31 arranged, for example, in its end, without the entire actuator assembly, i.e. its piston rod and cylinder part together with its pivot joint, moving in the plane defined by a vertical V rotational movement produced in the energy-wood grapple 200, as would occur, such as, for example, if the actuator were provided so as to be implemented according to the principle of a lever assembly designed to pivot the bucket of the excavator, i.e. inside a four-bar linkage, and were connected to one of the articulation points of the four-bar linkage. When designed in this manner, the actuator 28 is also mainly protected in all of its movement positions inside the first part 30.1 of the extension 30.

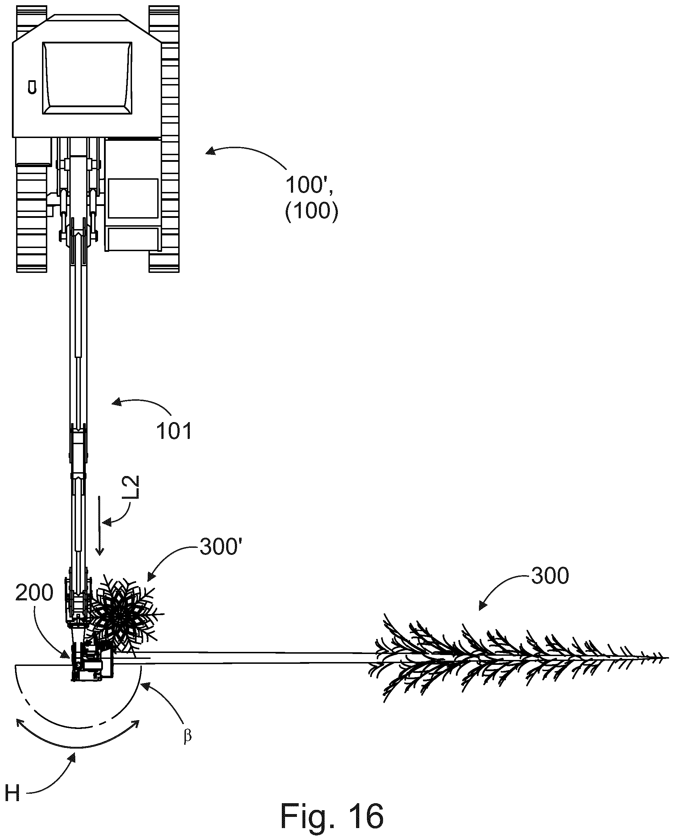

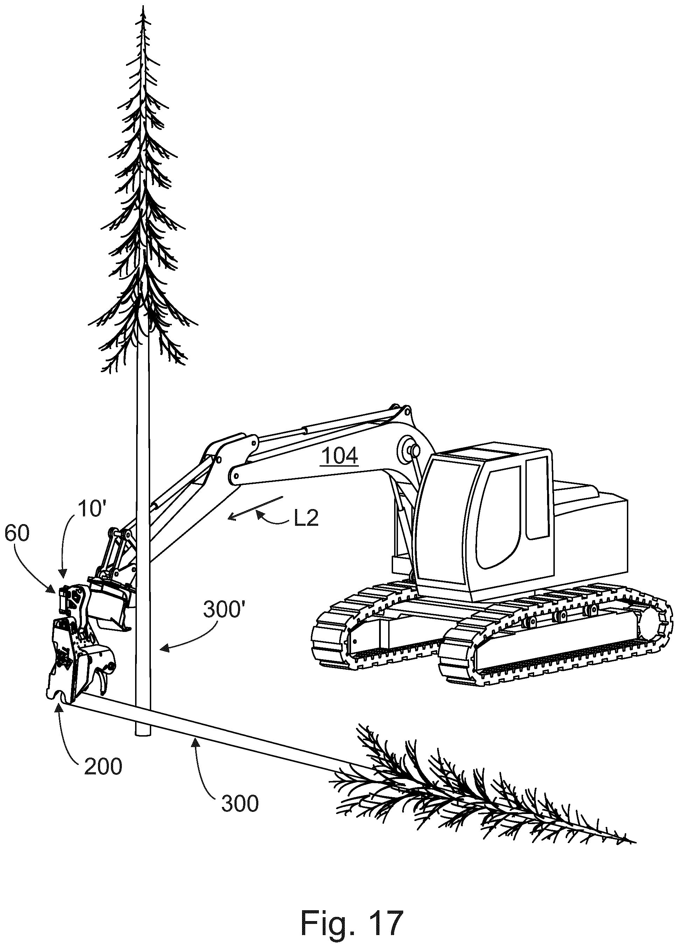

Furthermore, the arrangement 10' includes, in addition to the first pivot mechanism 29 which produces the felling rotation, a second pivot mechanism 60 for arranging the energy-wood grapple 200 in the arrangement 10' in a horizontally H pivotable manner. The second pivot mechanism 60 enables the implementation of an orientation of the energy-wood grapple 200 for working with the same in a horizontal plane H. The resulting advantage here is that the excavator 100', or at least its upper carriage 108.1, does not need to be constantly repositioned in order to orient the energy-wood grapple 200 for the next tree-felling operation. In this case, the corresponding function, which is implemented in connection with the extension 30, is achieved by simply rotating the energy-wood grapple 200 horizontally H. Moreover, thanks to the pivot mechanism 60, by means of a simple reorientation of the energy-wood grapple 200 that is easier to implement, trees 300 can be cut and even felled from behind retention trees 300', as shown in Figures 16 - 18, without the need for the more laborious manoeuvring of the excavator 100' or its upper carriage 108.1 mentioned above. Trees 300 can thus be felled in directions other than directly in the plane defined by the direction of movement of the booms of the boom assembly 101 of the work machine 100, as shown in Figures 16 - 18. This expedites the performance of work and also consumes less fuel. Moreover, it is thereby possible to manage without special rotator or tiltrotator equipment, which can be a considerable investment, arranged on the end 102 of the boom assembly 101.

As already stated in the foregoing, the extension 30 can include two parts 30.1, 30.2. In this case, according to one embodiment, the second pivot mechanism 60, which includes a pivot joint 19 and an actuator 20, is arranged on the opposite side of the at least one first part 30.1 of the extension 30 with respect to the energy-wood grapple 200. More specifically, the second pivot mechanism 60 is thus also arranged on the opposite end of the first part 30.1 of the extension 30 with respect to the first pivot mechanism 29 provided on the energy-wood grapple 200. As a result, the actuator 20 of the second pivot mechanism 60 thus pivots the first part 30.1 of the extension 30, i.e. the generally vertical V pivot mechanism 29 with its linking arm 39, and, via the linking arm 39, the energy-wood grapple 200 attached to the same, horizontally H.

According to the first embodiment shown in Figures 1 - 4, the extension 30 includes two parts 30.1, 30.2, and the second pivot mechanism 60, more specifically its pivot joint 19, is located between these parts 30.1, 30.2. The second part 30.2 of the extension 30 here includes a fixed fulcrum for the pivot joint 19 of the second pivot mechanism 60 on the side of the end 102 of the boom assembly 101. A horizontal rotational movement occurs via the same. The second part 30.2 of the extension 30 also includes a connector 210 here. The arrangement 10' is configured to be connected by the connector 210 to, for example, a quick coupling 109' of the fastening interface 109 arranged at the end 102 of the boom assembly 101. The second part 30.2 of the extension 30 can thus also be called a "connector frame" 17. Such a design with respect to the extension 30 alone already enables an improved reach compared to, for example, a design in which the energy-wood grapple 200 is directly connected, by its fastening interface 209.2 configured in the surface 204 of its implement frame 207, to a quick coupling 109' of the fastening interface 109 of the end 102 of the boom assembly 101. This feature will be discussed in more detail later on in the description of the application.

It is possible to implement the pivot actuator 20 of the second pivot mechanism 60 in a number of different ways. In the shown embodiment, a rotary actuator 38 is used. However, it could equally also be, for example, a rotator device of a forestry loader or even a horizontally arranged hydraulic cylinder. Some other possibilities are, for example, a planetary gear with a brake mechanism or a hub motor equipped with a brake mechanism. A specific advantage of a rotary actuator 38 is, for instance, that it does not need a brake mechanism. In addition, it enables the implementation of a large rotation angle, such as even 180 degrees. A specific example of a commercially available rotary actuator 38 can be the rotary actuator offered by Eckart Hydraulik, article number: 021-11225 and type: 21.1498.16 - SM3.105-185°/DBV/FU/SO.

According to one embodiment, the first pivot mechanism 29 includes an articulated connection 18' arranged between the energy-wood grapple 200 and the first part 30.1 of the extension 30. Articulated connection 18' is arranged in the energy-wood grapple 200 so that, in all operating situations, it is located on the side of the face of the extension 30 that lies opposite the face on the side of the end 102 of the boom assembly 101 of the excavator 100' when the arrangement 10' is provided on the end 102 of the boom assembly 101 of the excavator 100'.

The point at which the energy-wood grapple 200 is fastened to the first part 30.1 of the extension 30 is thus positioned in a plane lower than, for example, the first end of the elongated second part 30.2 of the extension 30. According to one embodiment, the dimensions and positioning of the linking arm 39 relative to, for example, the second part 30.2 of the extension 30 can also be defined so that the linking arm 39 is thin and short, but tall relative to, for example, the second part 30.2 of the extension 30. In addition, the linking arm 39 is oriented diagonally so as to extend underneath the second part 30.2 of the extension 30.

Moreover, when the extension 30 is viewed in the longitudinal direction, the attachment of the energy-wood grapple 200 to the extension 30 lies in a lower plane than, for example, the attachment of the second part 30.2 of the extension 30 to the end 102 of the boom assembly 101. This results in a well-balanced solution. In addition, when the first part 30.1 of the extension 30, i.e. the linking arm 39, is oriented so as to point obliquely downwards and away from the cutting device 203 of the energy-wood grapple 200, i.e. towards the rear side of the energy-wood grapple 200 with respect to the cutting device 203, a space is provided, for example, for a possible batch-handling means in the upper part of the implement frame 207 of the energy-wood grapple 200. This represents a possible example of equipment 214 provided on the energy-wood grapple 200 in addition to the cutting device 203. The energy-wood grapple 200 thus includes an implement frame 207 on which the cutting device 203 is arranged. The energy-wood grapple 200 is thus arranged by its implement frame 207, by means of the articulated connection 18' arranged therein, on the extension 30 so that an open space 213 free of structures is provided above the cutting device 203, for example, for equipment 214 provided on the energy-wood grapple 200 in addition to the cutting device 203. The space 213 or, for example, the equipment 214 arranged there is arranged so as to be located at least partially in front of the extension 30 in the longitudinal direction of the extension 30.

In the shown embodiment, the first part 30.1 of the extension 30 is a tall and narrow structure oriented so as to point more downwards than forwards. It follows from this as well as from the location of the articulated connection 18' provided in the implement frame 207 of the energy-wood grapple 200 that the pivot joint 18 of the articulated connection 18' is arranged in the energy-wood grapple 200 so that at least part of the implement frame 207 belonging to the energy-wood grapple 200 is arranged so as to be located underneath the first part 30.1 belonging to the extension 30.

The at least one actuator 28 that can produce the rotational movement of the energy-wood grapple 200 in the vertical direction V can be, for example, at least one hydraulic cylinder. The hydraulic cylinder can be a *per se* known, double-action liquid-operated hydraulic cylinder equipped with a single piston and a piston rod. In the majority of the figures, only the piston rod of the actuator 28 is visible. It acts here as the back and forth moving actuating member of the actuator 28. The piston at its end is configured to move back and forth inside the cylinder in the cylinder part under the action of a pressure medium, such as, for example, a fluid.

The hydraulic actuator is attached by one of its parts, in this case by its cylinder-part end, to the first part 30.1 of the extension 30. An articulation 31 for the actuator 28 is in turn arranged in this first part 30.1. Attachment takes place, for example, close to the second end of the first part 30.1, i.e., of the linking arm 39. The first part 30.1, i.e. the linking arm 39, is connected by this end to the second pivot mechanism 60. The articulated connection 18' of the energy-wood grapple 200 to the extension 30 via the pivot joint 18 can thus be at the first end, i.e. the opposite end, of the linking arm 39, which acts as a hanger. In addition, the first part 30.1 of the extension 30 is configured to be rigidly connected to the second pivot mechanism 60. In other words, there is thus a rigid connection between the first part 30.1 of the extension 30 and the pivot mechanism 60. This allows a rotational movement of the pivot mechanism 60 only for the first part 30.1 of the extension 30, and thus also for the energy-wood grapple 200 attached to the same.

According to one embodiment, the first part 30.1 of the extension 30, which can thus also be called the linking arm 39 as mentioned in the foregoing, can be a housing structure in which the hydraulic cylinder is arranged. The hydraulic cylinder is thus mainly protected in all operating situations. The actuating member of the hydraulic actuator, i.e., here the piston rod, is configured to act on the energy-wood grapple 200 in order to move it, i.e. to rotate it back and forth in the vertical V plane. In Figures 1, 3, 5, 7, 15a - 17b the energy-wood grapple 200 can be said to be in its cutting position, while, in Figures 2, 4, 6, 8 and 15b it can be said to be in its felling position. The vertical rotational movement V of the energy-wood grapple 200 thus occurs between these positions.

The actuator 28 of the first pivot mechanism 29 is also attached in an articulated manner to the energy-wood grapple 200 so that its movement, here its linear movement, produces a rotational movement of the energy-wood grapple 200 via the pivot joint 18 arranged in connection with it. According to one embodiment, the first pivot mechanism 29 includes, the articulated connection 18' arranged between the energy-wood grapple 200 and the first part 30.1 of the extension 30 and the actuator 28, which are arranged together in the energy-wood grapple 200 so that the articulated connection 18' is arranged between the articulation point 206 provided on the energy-wood grapple 200 for the actuator 28 and the cutting device 203 of the energy-wood grapple 200. In other words, the articulation point 206 of the actuator 28 is thus located on the side of the frame 11 of the auxiliary beam 13, i.e., more generally on the side of the extension 30. This detail also contributes to the achievement of a moderate rotation radius R. By means of a pushing movement of the actuator 28, the energy-wood grapple 200 thus turns upwards on the side of the cutting device 203. It is of course also possible for the arrangement of the joints 18, 206 to be reversed, i.e. for the articulation point 206 of the actuator 28 to be closer to the cutting device 203 than the first pivot joint 18. In this case, a pulling movement of the actuator 28 would turn the energy-wood grapple 200 upwards on the side of the cutting device 203.

According to one embodiment, the articulated connection 18' of the first pivot mechanism 29 is integrated in the implement frame 207 of the energy-wood grapple 200, and more specifically inside the same. In that case the implement frame 207 of the energy-wood grapple 200 includes, for example, an opening 208 for the extension 30, here for the first part 30.1 of the extension 30, in order to provide the articulated connection 18', more specifically the first pivot joint 18, belonging to the first pivot mechanism 29 and arranged between the energy-wood grapple 200 and the first part 30.1 of the extension 30, on the energy-wood grapple 200 as an internal structure of the same, more specifically as an internal structure of the implement frame 207 of the energy-wood grapple 200. As stated in the foregoing, the first pivot joint 18 can then be between the articulation point 206 configured in the energy-wood grapple 200 for the actuator 28 of the first pivot mechanism 29 and the cutting device 203 of the energy-wood grapple 200. The opening 208 allows the first pivot joint 18 to be integrated inside the energy-wood grapple 200 in a gap between internal structures instead of on the surface 204 of the implement frame 207 and/or on the rear part of the implement frame 207 of the energy-wood grapple 200. At the same time, the first pivot joint 18 is also brought closer to the outermost point 211 of the cutting device 203, more specifically the grapple part belonging to the cutting device 203. This thus also contributes to rendering the rotation radius R of the energy-wood grapple 200 more moderate.

According to one embodiment, an implement frame 207 of an energy-wood grapple 200 including an opening 208 can also be described as a fork structure. The articulation points 205, 206 for the first pivot joint 18 and the actuator 28 are arranged therein. The first part 30.1 of the extension 30, at its end on the side of the first pivot joint 18, is thus arranged partially inside the implement frame 207. This allows the end of the extension 30 to be placed in a better position in relation to the implement frame 207 of the energy-wood grapple 200. When the extension 30, here more specifically the first part 30.1 of the same, is connected to the implement frame 207 of the energy-wood grapple 200 close to its centreline area and the implement frame 207 is also located on both sides of this area, the first pivot joint 18 and the articulation point 206 of the actuator 28 are located at a point that bears a torsional load better than, for example, in an inverted arrangement in which the first part of the extension 30 forms a fork between which the energy-wood grapple pivots. This arrangement variant according to the invention thus makes it possible to get by with a single pivot joint 18 and a single actuator 28. Such a design yields a more compact as well as a more durable structure.

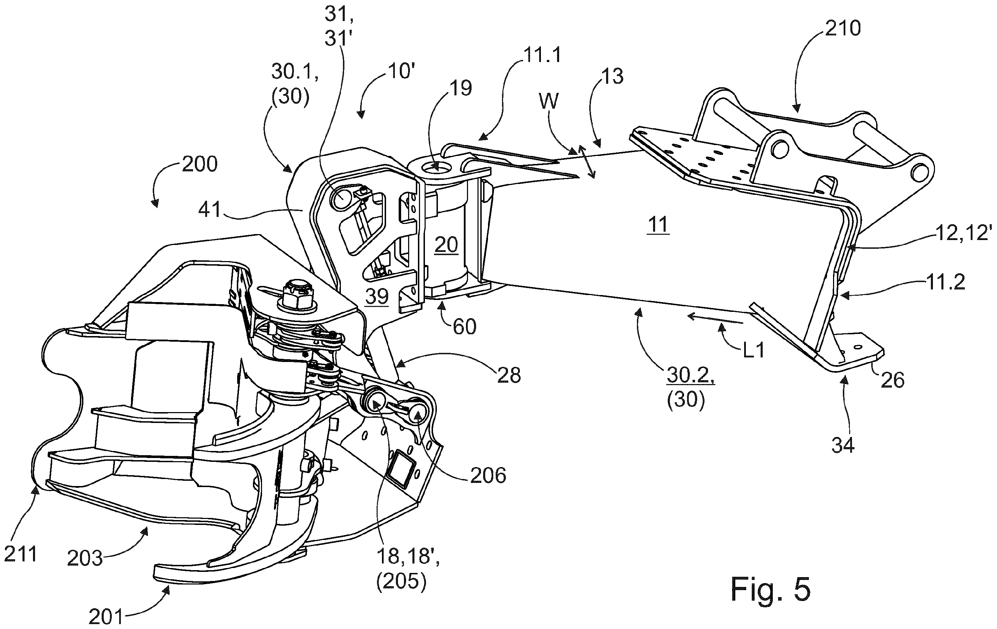

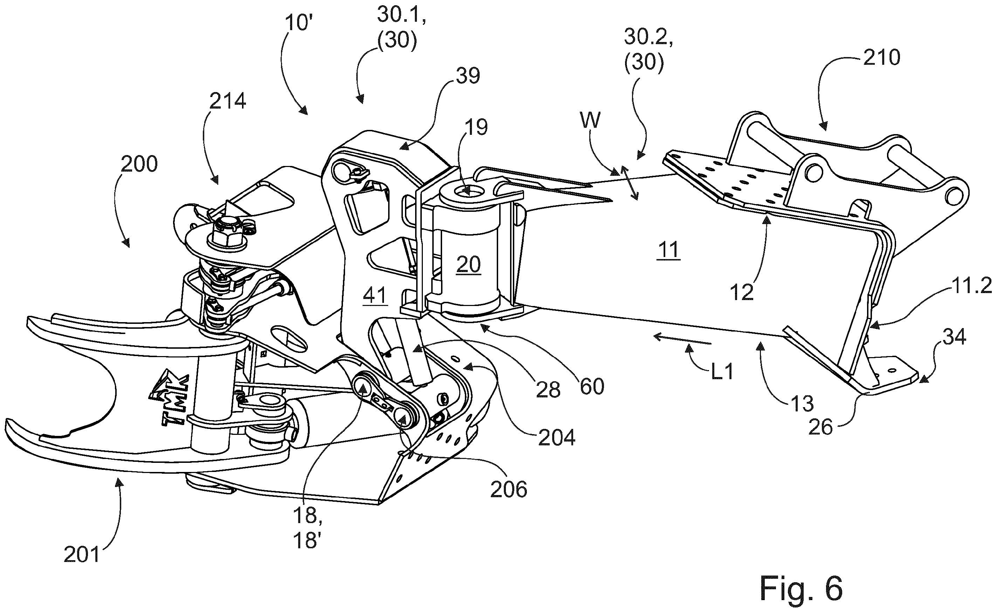

Figures 5 and 6 show a second embodiment of the arrangement 10'. This embodiment differs from the first embodiment in particular with respect to its extension 30. According to the second embodiment, the second part 30.2 of the extension 30 can be, instead of the connector frame 17 described in the foregoing, a fixed-length auxiliary beam 13. The frame 11 of the auxiliary beam 13 is elongated, which yields a greater reach for working with the energy-wood grapple 200. It can thus be said to have a longitudinal direction L1 (Figure 5) that is greater than, for example, its width direction W (Figure 5). The frame 11 of the auxiliary beam 10 can thus be said to have an elongated reach in the direction defined by a line running between the fastening interface 12 of the extension 30 and the energy-wood grapple 200, so as to thereby also function as an extension 30. By way of example, a length of the auxiliary beam 10 can be, for example, 0.5 - 1.5 m, more generally 0.5 - 2 m. Altogether the arrangement 10' makes it possible to obtain a cutting length of, for example, up to 2.5 m in the case of an auxiliary beam 10 of a fixed length.

The function of the auxiliary beam 10 is to provide a reach for working with the energy-wood grapple 200 when the auxiliary beam 10 is attached to the end 102 of the boom assembly 101 of an excavator 100'. The auxiliary beam 13 is consequently often also called an extension beam. According to one embodiment, the frame 11 of the auxiliary beam 13 can be configured so as to form an elongated housing structure, but other types, such as, for example, a bar frame, are equally entirely possible. Instead of a fixed-length auxiliary beam 13, the auxiliary beam could equally be, for example, telescopic, i.e. equipped with at least one extension that can move back and forth and its actuator.

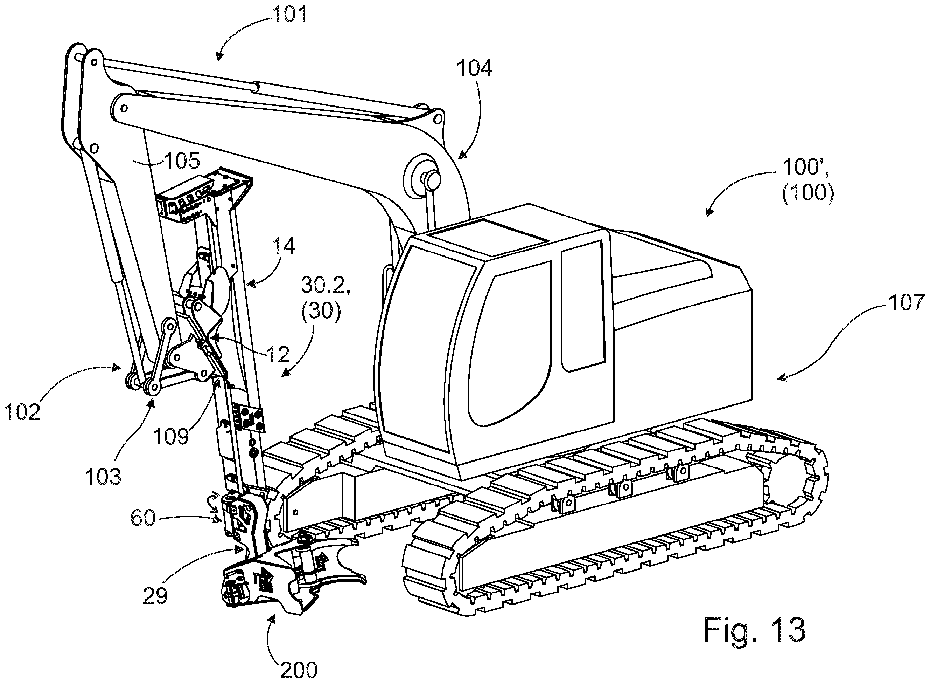

A support leg 34 is provided in the frame 11 of the auxiliary beam 13, more generally in the extension 30, in the shown embodiment. The support leg 34 here is in connection with the second end of the auxiliary beam 13, i.e. with the second part 30.2 of the extension 30. The end of the support leg 34 can have a ground support 26. It is noted that the auxiliary beam 13 does not have to include a support leg 34. The support leg 34 is configured to receive the weight of the boom assembly 101 and of the excavator 100' when the extension 30 is in contact with the ground. The support leg 34 is arranged so as to point to the opposite side of the auxiliary beam 13 with respect to the fastening interface 12 of the extension 30. In addition to a support on the ground, the support leg 34 can also be utilized in other ways. It can be used, for example, to move the excavator 100', for example, by pulling. To this end, the support leg 34 can have, for example, claws (Figure 13). In addition, the second part 30.2 of the extension 30, i.e. the auxiliary beam 13 here, can also be equipped with a loader grapple (not shown) for holding grapple bundles during an ongoing operation of the energy-wood grapple 200.

In this embodiment, the second pivot mechanism 60 for arranging the energy-wood grapple 200 on the auxiliary beam 13 in a horizontally H pivotable manner is arranged on the end of the second part 30.2 of the extension 30, i.e. on the end of the auxiliary beam 13 here. This end is the opposite end to the attachment of the second part 30.2 of the auxiliary beam 13, i.e. of the extension 30, to the boom assembly 101 of the excavator 100'. This is followed - analogously to the preceding embodiment - by the first part 30.1 of the extension 30 and the first pivot mechanism 29 arranged thereon for arranging the energy-wood grapple 200 in the arrangement 10' in a vertically V pivotable manner. These can be implemented analogously to what has already been shown and described, for example, in connection with Figures 1 - 4. The second pivot mechanism 60 is thus arranged between the first part 30.1 and the second part 30.2 of the extension 30 here too.

In the foregoing, the idea according to the invention, i.e. the felling link (pivot mechanism 29) of the energy-wood grapple 200 belonging to the arrangement 10' and the horizontal H orientation (pivot mechanism 60) of said energy-wood grapple 200 with respect to the end 102 of the boom assembly 101, has been explained in the form of embodiments in which the second part 30.2 of the extension 30 was a connector frame 17 as shown in Figures 1 - 4 or a fixed-length auxiliary beam 13 as shown in Figures 5 and 6. According to a third embodiment, it is also possible for the second part 30.2 of the extension 30 to be a variable-length auxiliary beam 14 or even a simple adapter 42 by means of which the arrangement 10' can be arranged on existing booms.

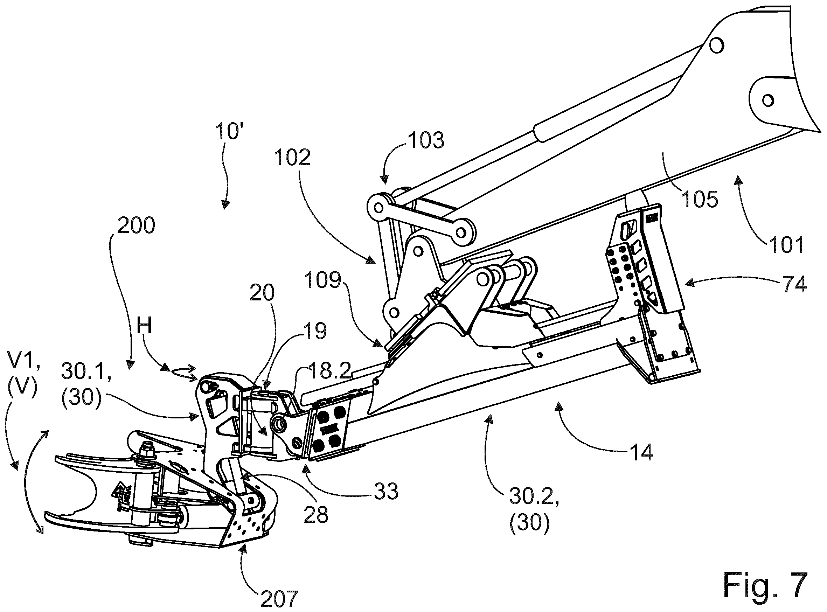

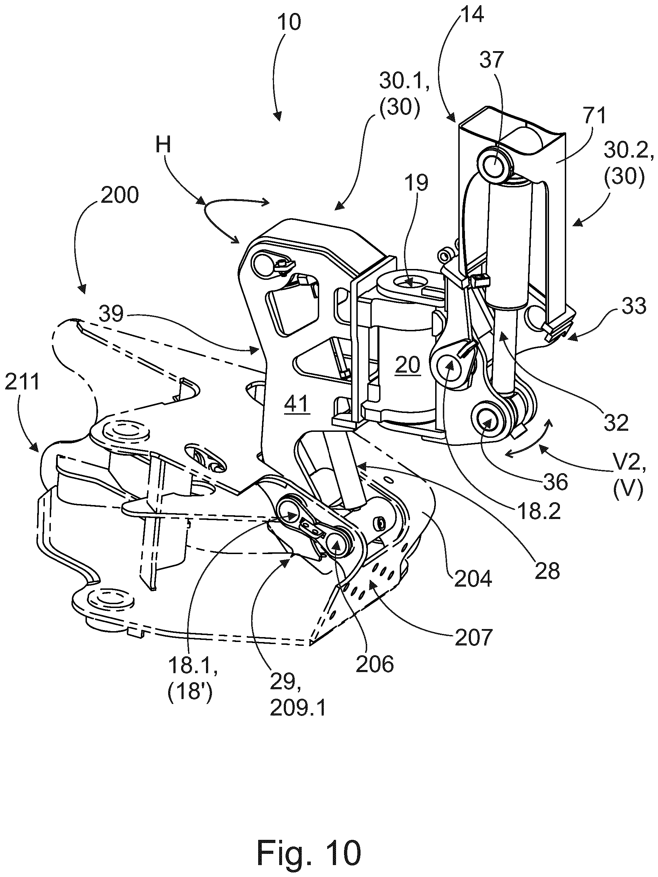

A third example of an arrangement 10' according to the invention is shown in Figures 7 - 10. In these figures, the second part 30.2 of the extension 30 is a variable-length extension beam 14. In this case, the horizontal H rotation of the energy-wood grapple 200 can be provided at its pivot mechanism 60 between the end of the telescopic arm 71 of the extension beam 14 and the energy-wood grapple 200. Even more specifically, it can be provided between the vertical V pivot mechanism 29 already described in the foregoing, i.e. the first part 30.1 of the extension 30, and the end of the telescopic arm 71 of the extension beam 14. The extension 30 can thus be said to include two parts 30.1, 30.2 in this case too. Of these parts, at least one first pivot mechanism 29, which includes a pivot joint 18.1 with actuators 28, is arranged on the first part 30.1 of the extension 30. In this case as well, the second part 30.2 of the extension 30 can be arranged on equipment arranged on the end 102 of the boom assembly 101 of the excavator 100' acting as the work machine 100. Moreover, it is an auxiliary beam 14 that is variable in length here. The second pivot mechanism 60, which includes a pivot joint 19 with actuators 20, is again arranged between the first part 30.1 and the second part 30.2 of the extension 30.

A vertical rotation of, for example, at least 160° is implemented on the extendible, i.e. variable-length, auxiliary beam 14 shown in Figures 7 - 10. To implement this in combination with a horizontal H rotation of the energy-wood grapple 200 is a structural challenge. According to one embodiment, when the second part 30.2 of the extension 30 is a variable-length auxiliary beam 14 like the one shown, the vertical V rotational movement provided for the energy-wood grapple 200 is divided into two separate rotational movements V1, V2. The implementation of the rotational movements V1, V2 is divided in this case between the two, i.e. opposite, sides of the second pivot joint 19, i.e. of the horizontal H rotation. The first rotational movement V1 of the two is the felling rotation of the energy-wood grapple 200. The associated pivot joint 18.1 including actuators 28 is arranged in connection with the first part 30.1 of the extension 30, wherein the pivot joint 18.1 is arranged at the opposite end of the first part 30.1 of the extension 30 relative to the second, i.e. horizontal H, pivot joint 19. This first vertical pivot mechanism 29.1 located in the arrangement 10' on the side of the energy-wood grapple 200 is thus used, for example, for felling a tree, as already shown, for example, in Figures 1 - 6.

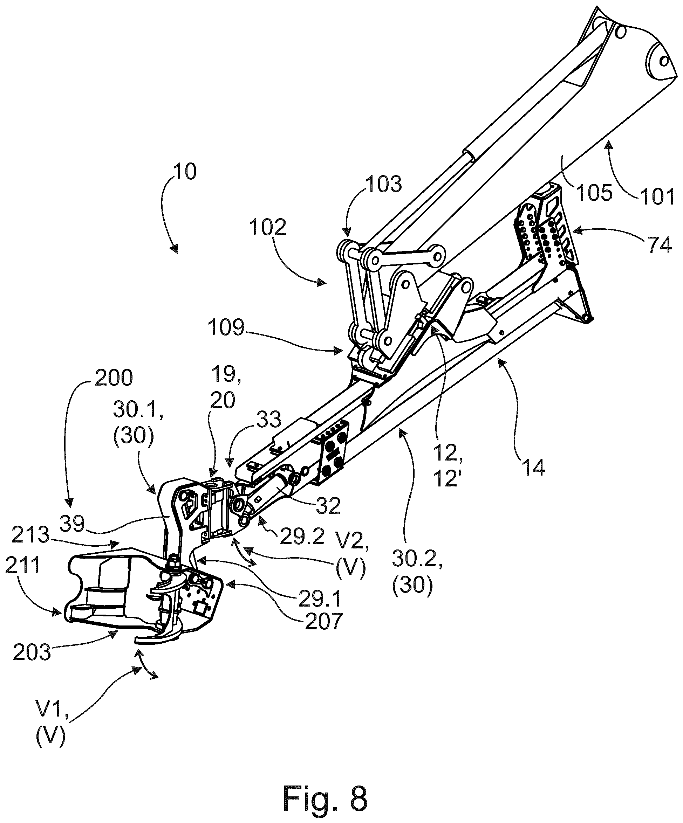

The second rotational movement V2, which is behind the horizontal H rotational movement, in relation to the energy-wood grapple 200, and thus on the side of the end 102 of the boom assembly 101, is in turn the levelling rotation of the energy-wood grapple 200. The associated separate pivot joint 18.2 including actuators 32 is arranged on the end 33 of the second part 30.2 of the extension 30. In the case of an extension beam 14, this end 33 is thus the end of the second part 30.2 here, i.e. the end of the extension beam 14 on the side of the energy-wood grapple 200. The second pivot mechanism 29.2 in this case, i.e. the pivot mechanism 29.2 located on the side of the telescopic arm 71 here, is primarily used to hold the horizontal pivot mechanism 60, and thus also the energy-wood grapple 200 connected to the same, in a horizontal position at all lengths of the extension beam 14. In other words, one can thus say that a felling link mechanism 29.1 and a levelling articulation/cylinder 32 are provided here separately, which can be seen in particular in Figures 8 - 10 thanks to the partially sectioned view.

A levelling operation can be automatic according to one embodiment. According to one embodiment, an automatic control of the levelling rotation can be implemented, for example, with a proportional valve. This can be based on a measurement performed by a position sensor, such as, for example, an inclination angle sensor. The cylinder 32, i.e. the actuator, of the levelling operation is located inside the telescopic arm 71 of the extension beam 14 here. The end of the telescopic arm 71 includes a pivot joint 18.2 in this case, to which the vertical V2 pivot mechanism 29.2 is attached in an articulated manner by a bracket 61 / hanger provided for the same, which can also be called the joint frame. There is an attachment articulation 36 for the cylinder 32 on the lower half of the bracket 61 and an attachment articulation 37 for the other end of the cylinder 32 inside the telescopic extension 71 here. By changing the length of the cylinder 32, the pivot mechanism 60 arranged on the bracket 61 can be rotated vertically, which renders possible a levelling rotation of the energy-wood grapple 200. A levelling rotation is needed, for example, to take into account the variable and considerable length of the auxiliary beam 14 and thus the distance of the energy-wood grapple 200 from the end 102 of the boom assembly 101. It allows the energy-wood grapple 200 to be constantly in a mainly horizontal position at any length of the auxiliary beam 14 when it is used, for example, in a cutting situation.

The wide-ranging mobility of the telescopic extension beam 14 in every direction makes it possible to stack trees almost anywhere and in any direction. Moreover, it also allows, for example, trees 300 to be harvested from behind other upright trees 300' that are to be retained. As can be seen from Figure 16, a rotation angle β of the horizontal H rotational movement relative to a centreline can be, for example, at least 90° in both directions, i.e. altogether approximately 180°.

By dividing the vertical pivot mechanism 29 into two different operations 29.1, 29.2 occurring on either side of the horizontal rotation 60, i.e. for felling a tree and for controlling the position of the energy-wood grapple 200 (horizontal leveller), it is possible to implement a sufficiently wide-ranging vertical rotation, for example, between the extendible auxiliary beam 14 and the energy-wood grapple 200 (150 - 180°). This is essential in particular keeping in mind that, when working with a hydraulic extension beam 14, when the heel 74 of the extension beam 14 rests against the excavation arm 105, the bucket-pivoting arm assembly 103 of the excavator 100' is typically locked. All movements that would otherwise be produced with the latter are thus implemented at the end of telescopic extension 71.

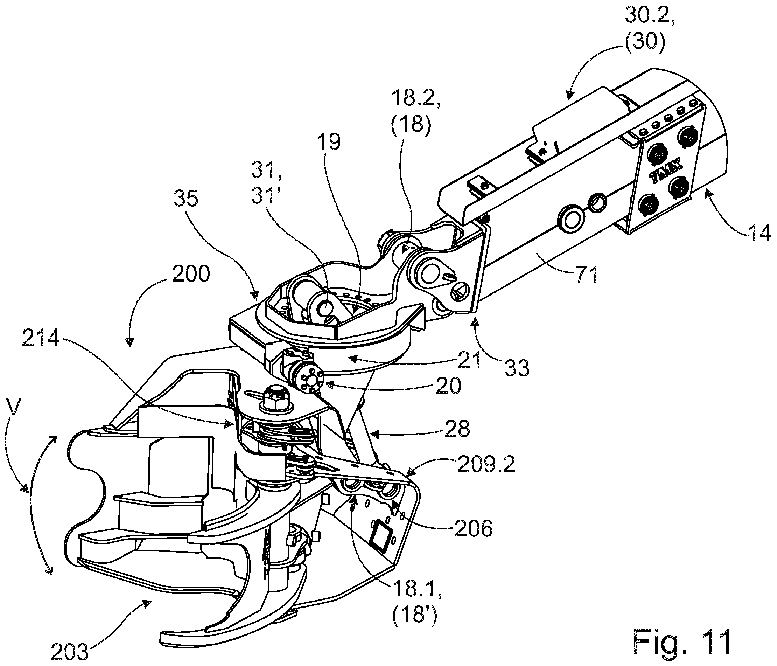

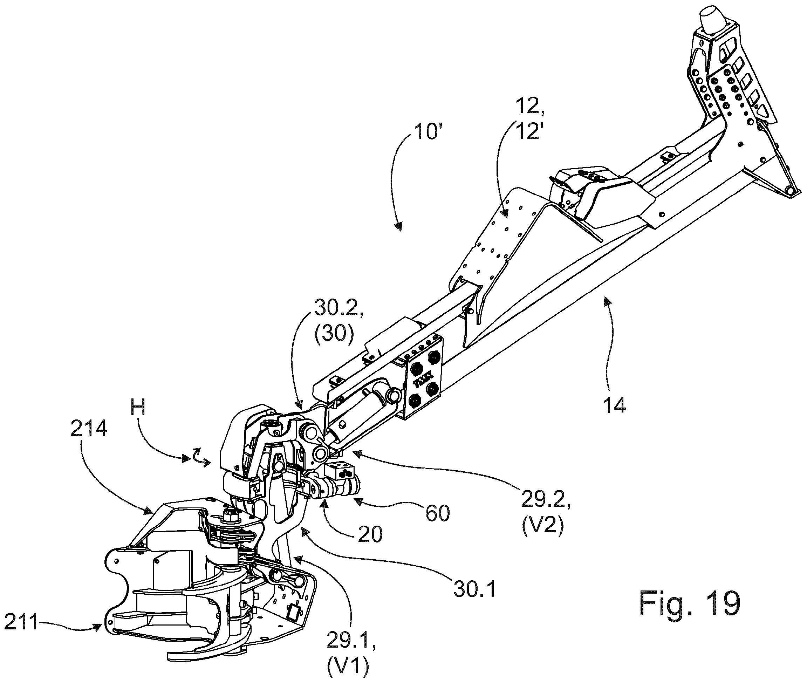

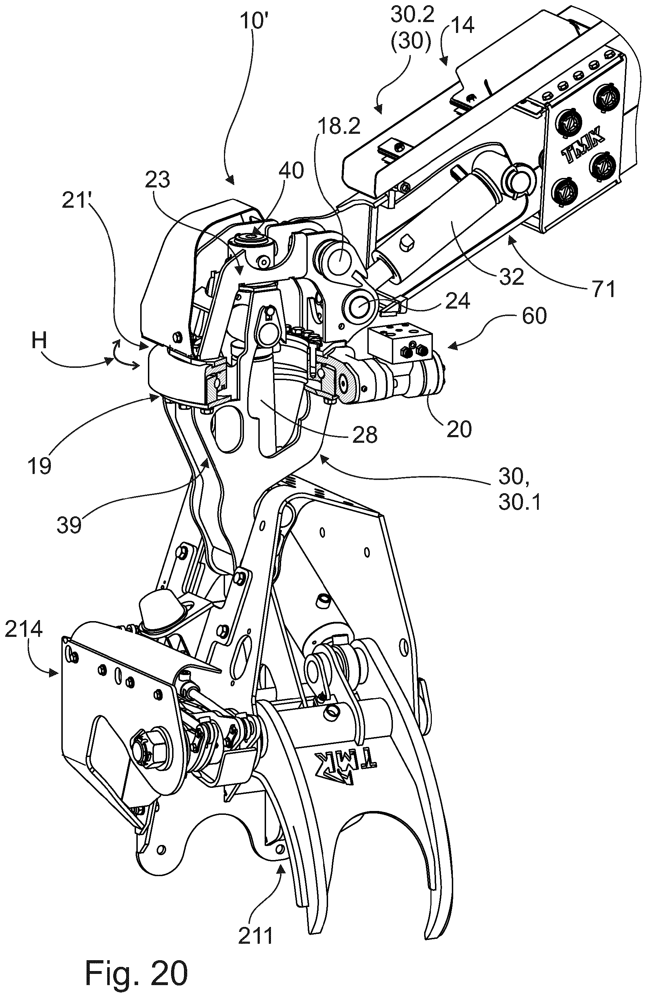

Figure 11 shows another alternative way of implementing the horizontal H pivot mechanism 60. Reference is also made here to Figures 19 and 20, which show a variant of this implementation. In this case, the actuator 20 of the second pivot mechanism 60 is a worm drive 35. A fixed eye part 21 is attached in an articulated manner by the pivot joint 18.1 to the end of the telescopic arm 71 of the auxiliary beam 14. The eye part 21 is thus configured as part of the second part 30.2 of the extension 30, here at the end of the latter. The eye part 21 acts as a fixed frame 21' for the worm drive 35. A gearwheel 22 belonging to the worm drive 35 can be provided in a manner known *per se* in connection with the eye part 21, for example inside the same (Figure 21). The outer perimeter of the gearwheel 22 has teeth with which a threaded rod, i.e. a worm, of the actuator 20 belonging to the worm drive 35 meshes. The first part 30.1 of the extension 30 can be suspended from the gearwheel 22 here, for example on its inner perimeter or at some other suitable location. In the case of a worm drive 35, the horizontal rotation can even be fully rotational. In other respects, the implementation can be as described in the foregoing.

With reference to the embodiment shown in Figures 19 - 21, the vertical V rotational movement is likewise divided between two sides of the worm drive 35, i.e. into a levelling rotation arranged on the side of the end 102 of the boom assembly 101 and a felling rotation arranged on the side of the energy-wood grapple 200. The levelling rotation is implemented by means of the pivot joint 18.2 functionally arranged on the eye 21 and for which an articulation point is arranged at the end of the telescopic extension 71. Moreover, the actuator 32 is functionally arranged on the eye 21 in order to effect the levelling rotation. The actuator 32 is inside the telescopic extension 71 of the beam 14 here. In the shown embodiment, the eye 21 includes a suspension 23, which is connected to the eye 21, i.e. to the fixed frame 21' of the worm drive 35. An articulation 18.2 of the eye 21 and an articulation 24 of the actuator 32 are arranged on the suspension 23. The eye 21 is connected by its pivot joint 18.2 to the end 102 of the boom assembly 101 or to the end of the auxiliary beam 13, 14. In addition, the suspension 23 can also include a non-rotary support point for a rotary coupling 40. By means of the coupling 40, hydraulic lines can be run between the rotating parts, i.e. the suspension 23 and the connection for the worm drive 35 in this case. The rotary coupling 40 consequently prevents a twisting of the hydraulic hoses between the rotating parts. Figure 20 shows the energy-wood grapple 200 in its felling position.

The extension 30, more specifically the first part 30.1 of the extension 30, i.e. the linking arm 39, can be connected to the energy-wood grapple 200 analogously to the embodiments described in the foregoing. The first part 30.1 of the extension 30 is connected by its end on the side of the second pivot mechanism 60 to the movable part arranged in the eye part 21, i.e. to the gearwheel 22 here. The gearwheel 22 is thus arranged so as to act on the first part 30.1 of the extension 30. The gearwheel 22 is thus arranged so as to rotate the first part 30.1 of the extension 30, which is articulated in a rotatable manner to the eye part 21, in order to carry out an orientation of the energy-wood grapple 200 in a horizontal direction H. The connection principle here is a flange connection. To this end, the first part 30.1 of the extension 30 can be circular at the end on the side of the pivot joint 19. The circular end has a connecting interface 25 formed by a flange 27, by which the first part 30.1 of the extension 30 is connected to the gearwheel 22, here to its downwards facing lateral surface.

In the embodiment shown in Figure 11, the felling-rotation mechanism, i.e. the first pivot mechanism 29, and the horizontal-rotation mechanism 60 are nested. A worm drive is one way of implementing this. More generally speaking, without being limited to a vertical rotation provided on either side of a horizontal-rotation H mechanism 60, the actuator 20 of the second pivot mechanism 60 can be implemented as a worm drive 35 and the actuator 28 belonging to the first pivot mechanism 29 can be arranged so as to be nested inside the second pivot mechanism 60. This is advantageous in terms of a saving of space. The actuator 28 of the felling-rotation, i.e. first, pivot mechanism 29 is arranged longitudinally so as to run through the horizontal-rotation mechanism 60, i.e. through its fixed eye 21 and the movable gearwheel 22 arranged in connection with the same. This also allows the articulation points to be located much closer together, which yields a functional advantage. The position of the levelling cylinder 32 inside the extension beam 71 also contributes to this advantage. Furthermore, according to one embodiment, in addition to the actuator 28 of the first pivot mechanism 29, the first part 30.1 of the extension 30 can also be arranged so as to be partially nested inside the second pivot mechanism 60. It is thereby possible to provide an attachment point 31' for the first part 30.1 of the extension 30, in connection with the end of the same, on the actuator 28 of the first pivot mechanism 29. The attachment point 31' can thereby be positioned close to other articulation points, such as, for instance, the levelling-rotation pivot joint 18.2 and the articulation point 24 of the levelling-rotation actuator 32.

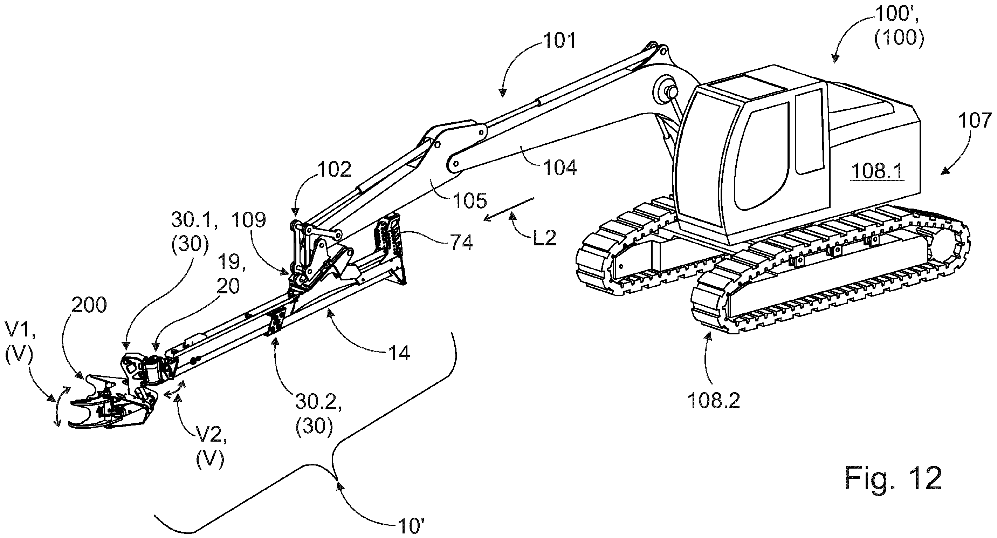

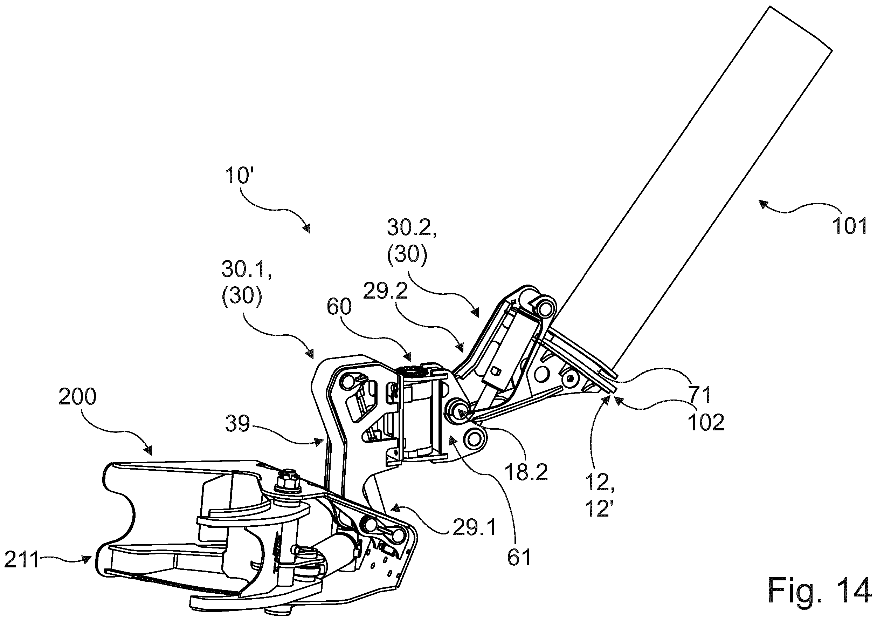

The invention has been explained in the foregoing with an excavator 100' as the work machine 100. The arrangement 10' according to the invention is, however, similarly also possible, for example, in forestry machines, forestry loaders as well as in extension beams 14 without their forming an essential part of the arrangement 10' according to the invention. Figure 14 shows an example of an arrangement 10' arranged on a forestry machine. The second part 30.2 of the extension 30 is arranged on the end 102 of a boom assembly 101 in Figure 14, wherein the second part 30.2 is an articulated frame 61 of the horizontal-rotation mechanism 60 here. Two vertical-rotation mechanisms 29.1, 29.2 are provided here as well, on opposite sides of the horizontal-rotation mechanism 60. Furthermore, this differs from the extension-beam embodiment described above with reference to Figures 7 - 13 in that the telescopic extension 71 is part of the boom assembly 101 of the forestry machine here. Instead of a boom assembly of a forestry machine, it would equally be possible here for any extension beam 14 to be provided on which the arrangement 10' according to the invention is either originally installed or retrofitted.

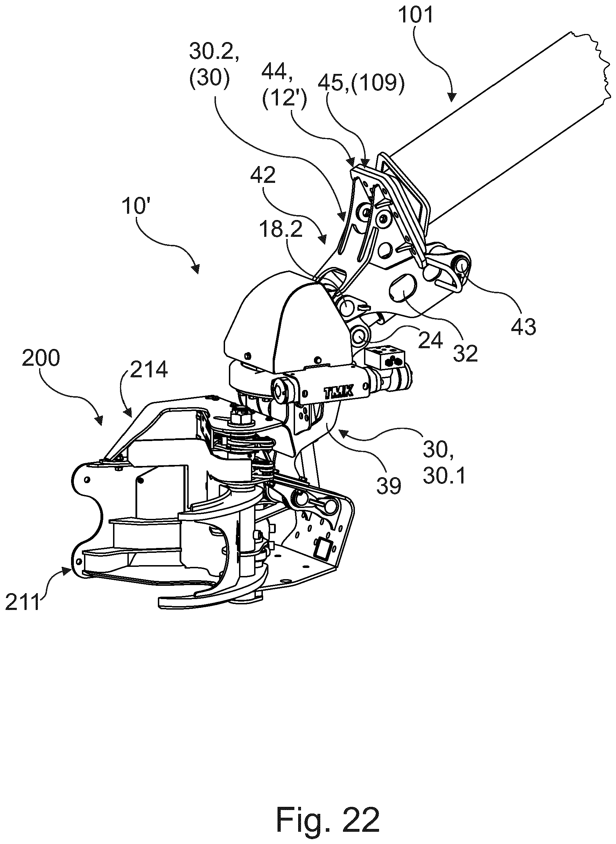

Figure 22 shows another embodiment for arranging the arrangement 10' on the end of, for example, a telescopic arm 71 of an extension beam 14 or a boom assembly 101 of a forestry machine. This embodiment can be used, for example, when it is more awkward to arrange the levelling-rotation cylinder 32 inside the boom assembly 101 in the manner shown, for example, in Figures 9, 10, 19 - 21. The connection of the arrangement 10' to the end of the boom assembly 101 is implemented here as part of the suspension 23 or otherwise as a separate adapter 42 for providing an external articulation point 43 for the cylinder 32. In this case, the suspension 23 or adapter 42 includes a coupling interface 44 by which it is connected to a coupling interface 45 at the end of the telescopic arm 71 of the extension beam 14 or of the boom assembly 101 of the forestry machine. The articulation point 24 for the cylinder, i.e. actuator 32, is part of the suspension 23. In the case of a separate adapter 42, the levelling-rotation pivot joint 18.2 is arranged on the adapter 42. In this embodiment, the adapter 42 acts as the second part 30.2 of the extension 30 if the coupling occurs, for example, directly on the end of the boom assembly of the forestry machine or on the end of the telescopic arm 71 of the extension beam 14. In contrast to the embodiments described in the foregoing, according to one embodiment, an extension beam 14 with an associated telescopic arm 71 is thus not necessarily always part of the arrangement 10' according to the invention. In other words, the arrangement 10' can just as well end with the adapter 42. It is thus also possible to arrange the arrangement 10' on existing extension beams 14 either as part of the original assembly or as a retrofitted element. In other words, the extension beams 14 are still connected to the end of a selected boom assembly 101 in a selected manner.

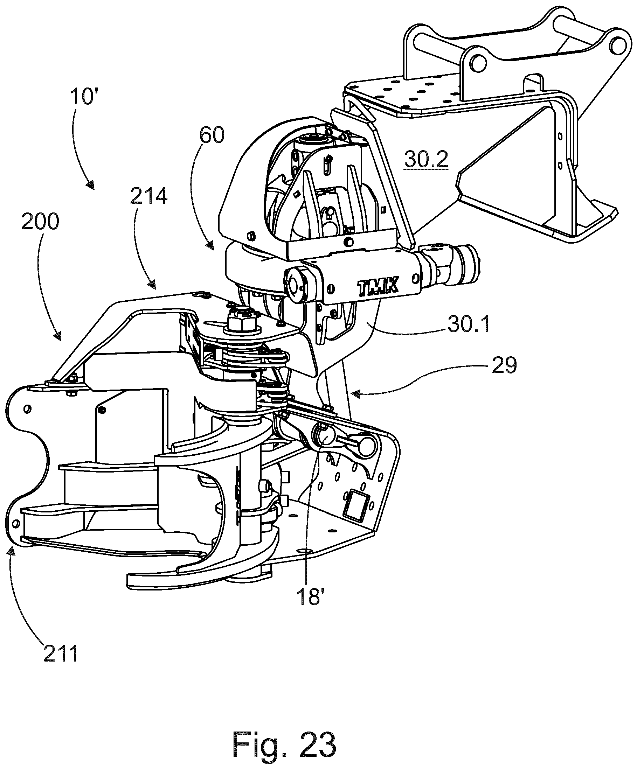

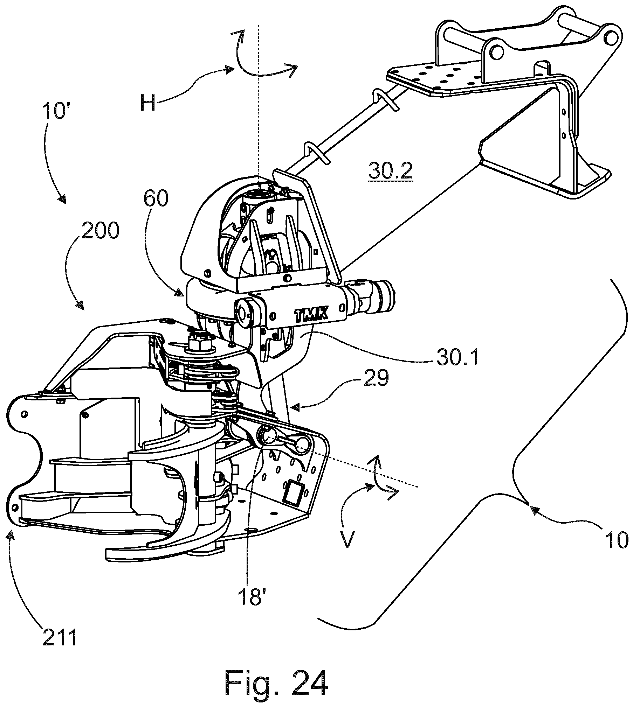

Figures 23 and 24 show some more examples of extensions 30, more specifically of second parts 30.2 of the extensions 30 in the case of a worm drive 35.

According to one embodiment the energy-wood grapple 200 can further include fastening interface 209.2 (Figure 11) configured in the surface 204 of the implement frame 207 of the energy-wood grapple 200 as well as here at least partially around the opening 208 arranged in the implement frame 207. This fastening interface 209.2 is provided for a connector 210 or a quick coupling 109' arranged directly on the end 102 of the boom assembly 101. The fastening interface 209.2 is thus configured to arrange the energy-wood grapple 200, for example, on the end 102 of the boom assembly 101 of the excavator 100', even without the rotational movements V, H according to the invention and provided in connection with the extension 30, i.e. as part of the arrangement 10', i.e., for example, without a linking arm 29 and auxiliary beam 13 or without an extension 30 with pivot mechanisms 29, 60 at all. The connector 210 can be, for example, a plate connector 210'. A plate element bent at an angle and including holding members for connecting to, for example, a quick coupling 109' can constitute the connector 210 in this case. The holding members here are two tubular bars arranged at a distance from each other. They are connected at both ends by plate flanges. The connector 210 can be attached, for example, with screws, to the rear surface 204 of the frame 207 of the energy-wood grapple 200. Perforations are arranged in said rear surface for attachment to the connector 210. This second fastening interface 209.2 in the surface 204 of the implement frame 207 of the energy-wood grapple 200 improves the modularity of the energy-wood grapple 200, i.e. its suitability for different applications. This makes it possible for the same energy-wood grapple 200 to be used in applications with as well as without a vertical V and also a horizontal H rotational movement, the energy-wood grapple 200 thus being attached to a quick coupling 109' arranged on the end 102 of the boom assembly 101 directly via the surface 204 of the implement frame 207 of the energy-wood grapple 200, or via a connector 210, for example, as shown in Figures 3 and 4, provided on said surface 204, or via a rigid auxiliary beam 13.

In addition to the arrangement 10', the invention also relates to a method for providing positioning properties for working with an energy-wood grapple 200. In the method, an energy-wood grapple 200 equipped with a cutting device 203 is arranged by means of an articulated connection 18' on a first part 30.1 of an extension 30, which first part 30.1 is arranged further outwards relative to a work machine 100. In addition, in the method, a connection point 12' for arranging the extension 30, and thus also the energy-wood grapple 200 via the extension 30, on a fastening interface 109 of an end 102 of a boom assembly 101 of the work machine 100 is provided on a second part 30.2 of the extension 30 that is closer to the work machine 100.

Furthermore, in the method, at least one first pivot mechanism 29 for pivoting the energy-wood grapple 200 vertically V is provided on the first part 30.1 of the extension 30. The rotational movement thus occurs in a plane, i.e. a vertical plane, defined by the direction of movement of the booms of the boom assembly 101 of the work machine 100 when the extension 30 is oriented in the longitudinal direction L2 of the boom assembly 101. More specifically, this at least one first pivot mechanism 29 is arranged between the first part 30.1 of the extension 30 and the energy-wood grapple 200. A rotation in the vertical plane takes place by means of the at least one first pivot mechanism 29. The axis of rotation of the energy-wood grapple 200 is thus horizontal and consequently in an orientation that deviates from, for example, the orientation of the plane defined by the booms 104, 105 of the boom assembly 101.

Furthermore, in the method, a second pivot mechanism 60 for pivoting the energy-wood grapple 200 horizontally H is arranged between the first part 30.1 and the second part 30.2 of the extension 30. A rotation in a horizontal plane takes place by means of the second pivot mechanism 60. The axis of rotation of the energy-wood grapple 200 is thus vertical and consequently in the same orientation as the orientation of the plane defined by the booms of the boom assembly 101.

Furthermore, according to one embodiment of the method, the first part 30.1 of the extension 30 is arranged in the method so as to be rigidly connected to the second pivot mechanism 60. A horizontal H rotational movement of the energy-wood grapple 200 and of the first part 30.1 of the extension 30, to which the energy-wood grapple 200 is connected, thus occurs in a controlled manner and only in accordance with the horizontal H rotational movement.

According to one embodiment, in particular for controlling the position of the energy-wood grapple 200, the implementation of the vertical rotational movement V can be divided into two rotational movements V1, V2 that are implemented separately. These are the felling rotation V1 of the energy-wood grapple 200 and the levelling rotation V2 of the energy-wood grapple 200. These vertically rotational movements V1, V2 are carried out in an orientation that increases the reach of the extension 30 to opposite sides of a second rotational mechanism 60, i.e. of a horizontal pivoting action. This makes it possible to implement a very large pivoting movement, which is in particular necessary in embodiments comprising an extension beam in which it is also necessary to control the position of the energy-wood grapple 200, which depends on the length of the extension beam 14.

According to one embodiment, a substitution of the rotator or tiltrotator properties of the end 102 of the boom assembly 101 of a work machine 100, more specifically of an excavator 100', is implemented by means of the second pivot mechanism 60, i.e. the horizontal H rotational movement. The same positioning and orientation properties can thus be achieved closer to the implement, i.e. to the energy-wood grapple 200. This reduces the strain acting on the work machine 100' and also consumes less energy. An additional advantage is an improved working accuracy and thus an associated increase in work efficiency, in many different ways.

In addition to an arrangement 10' and a method, the invention also relates to an apparatus for harvesting energy wood. The apparatus includes an energy-wood grapple 200 equipped with a cutting device 203. In addition, the apparatus also includes an extension 30. Through the extension 30 the energy-wood grapple 300 is to be arranged via a connection point 12' arranged to the extension 30, for example, to a fastening interface 109 arranged to the equipment 109' of the end 102 of the boom assembly 101 of the work machine 100. For example, in the case of an excavator 100', the equipment is movable by means of a bucket-pivoting arm assembly 103. At least the energy-wood grapple 200 and the extension 30 are part of the arrangement 10' according to the invention in the apparatus. The apparatus further additionally includes possible connectors 210, which can be arranged between the fastening interface 109 of the end 102 of the boom assembly 101 of the work machine 100 and the connection point 12' of the extension 30.

Figures 16 - 18 shows an example of possibilities for the harvesting of energy wood provided by the arrangement 10' according to the invention. As is evident from the figures, the felling of a tree 300 from behind a retention tree 300' becomes readily possible with the arrangement 10' according to the invention.

According to the invention, by combining a horizontal H pivoting movement with a vertical V felling rotation yields an increased flexibility when working with the energy-wood grapple 200. In addition, both movements, which are implemented with the actuators 28, 20 and own independently controllable mechanisms 29, 60, can be controlled at all times by the operator of the work machine 100. Compared to, for example, conventional harvesters and timber loaders, which are equipped with a hanging suspension, the movements in the solutions according to the invention can be limited and even stopped them at any time and in any desired position. As a result, work is stable and controlled in all situations and positions, as the load cannot swing freely. In addition to the fact that trees 300 can be harvested from behind other upright trees 300' that are to be retained, the mobility in all directions further ensures that trees can also be felled and stacked in almost any direction.

It is understood here that the foregoing description and the accompanying figures are intended solely to show the present invention. The invention is therefore not limited to the embodiments shown in the foregoing or defined in the claims, but rather the person skilled in the art will be able to derive many different variations and variants of the invention that are possible within the scope of the inventive concept defined in the attached claims.

## Claims

1. An arrangement for harvesting energy wood, wherein the arrangement (10') includes
- an energy-wood grapple (200) equipped with a cutting device (203),
- an extension (30) which includes two parts (30.1, 30.2), wherein
- the energy-wood grapple (200) is arranged on the first part (30.1),
- the second part (30.2) includes a connection point (12') for arranging the extension (30) on a fastening interface (109, 45) of an end (102) of a boom (101, 71),
- at least one first pivot mechanism (29) arranged on the first part (30.1) of the extension (30) for arranging the energy-wood grapple (200) in the arrangement (10') in a vertically (V) pivotable manner,
- a second pivot mechanism (60) arranged between the first part (30.1) and the second part (30.2) of the extension (30) for arranging the energy-wood grapple (200) in the arrangement (10') in a horizontally (H) pivotable manner.

2. The arrangement according to Claim 1, **characterized in that** the first pivot mechanism (29) includes an articulated connection (18') arranged between the energy-wood grapple (200) and the first part (30.1) of the extension (30), wherein the articulated connection (18') is arranged on the energy-wood grapple (200) in such a manner that a rotation radius (R) of the energy-wood grapple (200) with respect to said articulated connection (18') is less than 3.5 times a nominal diameter of a tree (300) to be manipulated by the energy-wood grapple (200).

3. The arrangement according to Claim 1 or 2, **characterized in that** the first pivot mechanism (29) includes an articulated connection (18') arranged between the energy-wood grapple (200) and the first part (30.1) of the extension (30) and an actuator (28), which are arranged in the arrangement (10') in such a manner that a rotation angle (α) of the energy-wood grapple (200) with respect to the articulated connection (18') is 90 - 110 degrees, more generally 80 - 110 degrees.

4. The arrangement according to any one of Claims 1 - 3, **characterized in that** the first pivot mechanism (29) includes an articulated connection arranged between the energy-wood grapple (200) and the first part (30.1) of the extension (30) and an actuator (28), which are arranged on the energy-wood grapple (200) in such manner that the articulated connection (18') is arranged between an articulation point (206) provided on the energy-wood grapple (200) for the actuator (28) and the cutting device (203) of the energy-wood grapple (200).

5. The arrangement according to any one of Claims 1 - 4, **characterized in that** the energy-wood grapple (200) includes an implement frame (207) in which an opening (208) is arranged for the first part (30.1) of the extension (30) in order to provide an articulated connection (18'), which is arranged between the energy-wood grapple (200) and the first part (30.1) of the extension (30) and which belongs to the first pivot mechanism (29),
- as an internal structure of the energy-wood grapple (200),
- preferably between an articulation point (206) that is arranged on the energy-wood grapple (200) for an actuator (28) belonging to the first pivot mechanism (29) and the cutting device (203) of the energy-wood grapple (200).

6. The arrangement according to any one of Claims 1 - 5, **characterized in that** a vertical (V) rotational movement is divided into two rotational movements (V1, V2) that are arranged on either side of the second pivot mechanism (60), wherein
- the first rotational movement (V1) is a felling rotation of the energy-wood grapple (200), for which a pivot mechanism (29.1) is arranged on the first part (30.1) of the extension (30),
- the second rotational movement (V2) is a levelling rotation of the energy-wood grapple (200), for which a pivot mechanism (29.2) is arranged on the second part (30.2) of the extension (30).

7. The arrangement according to Claim 6, **characterized in that** a magnitude of a rotation angle of the vertical (V) rotational movement is 150° - 180°.

8. The arrangement according to any one of Claims 1 - 7, **characterized in that** the second pivot mechanism (60) includes an actuator (20), which is one of the following
- a worm drive (35),
- a hydraulic cylinder,
- a rotator device of a forestry loader,
- a rotary actuator (38),
- a planetary gear,
- a hub motor.

9. The arrangement according to any one of Claims 1 - 8, **characterized in that** an actuator (20) of the second pivot mechanism (60) is a worm drive (35) and an actuator (28) belonging to the first pivot mechanism (29) is arranged so as to be nested inside the second pivot mechanism (60).

10. The arrangement according to Claim 9, **characterized in that**, in the second pivot mechanism (60),
- the worm drive (35) includes a gearwheel (22) with actuators (20),
- the gearwheel (22) is arranged inside a fixed eye part (21), which is configured as part of the second part (30.2) of the extension (30),
- the first part (30.1) of the extension (30), which the gearwheel (22) is configured to act on, is articulated in a rotatable manner on the eye part (21).

11. The arrangement according to Claim 9 or 10, **characterized in that**, in addition to the actuator (28) of the first pivot mechanism (29), the first part (30.1) of the extension (30) is arranged so as to be partially nested inside the second pivot mechanism (60) in order to provide an attachment point (31') for the actuator (28) of the first pivot mechanism (29).

12. The arrangement according to any one of Claims 1 - 11, **characterized in that** a rotation radius (R) of the energy-wood grapple (200) is configured to be defined by a distance (D) between an articulated connection (18') and an outermost part (211) of the cutting device (203).

13. A method for providing positioning properties for working with an energy-wood grapple, in which method
- an energy-wood grapple (200) equipped with a cutting device (203) is arranged on a first part (30.1) of an extension (30),
- a connection point (12') for arranging the extension (30) on a fastening interface (109, 45) of an end (102) of a boom (101, 71) is provided on a second part (30.2) of the extension (30),
- at least one first pivot mechanism (29) for pivoting the energy-wood grapple (200) vertically (V) is arranged on the first part (30.1) of the extension (30),
- a second pivot mechanism (60) for pivoting the energy-wood grapple (200) horizontally (H) is arranged between the first part (30.1) and the second part (30.2) of the extension (30).

14. The method according to Claim 13, **characterized in that** a vertical (V) rotational movement of the energy-wood grapple (200) is implemented as two separate rotational operations (V1, V2), which are
- a felling rotation (V1) of the energy-wood grapple (200),
- a levelling rotation (V2) of the energy-wood grapple (200),
wherein the rotational operations (V1, V2) are implemented on opposite sides of a second horizontal (H) rotational movement.

15. An apparatus for harvesting energy wood, which includes
- an energy-wood grapple (200) equipped with a cutting device (203),
- an extension (30) via which the energy-wood grapple (200) is to be arranged on a fastening interface (109, 45) arranged on equipment (109') of an end (102) of a boom (101, 71) via a connection point (12') provided on the extension (30),
**characterized in that**
- at least said energy-wood grapple (200) and extension (30) are part of an arrangement (10') according to any one of Claims 1 - 12,
- the apparatus further includes possible connectors (210) which is to be arranged between the fastening interface (109, 45) of the end (102) of the boom (101, 71) and the connection point (12') of the extension (30) .
